# EUROPEAN PATENT APPLICATION

(11) **EP 3 920 518 A1**
(43) Date of publication of application: **08.12.2021**
(21) Application number: 20748233.2
(22) Date of filing: 21.01.2020
(51) Int. Cl.: H04M 11/00, H04Q 9/00, G10L 13/08, G06F 3/01, G10L 15/22

(54) **INFORMATION APPARATUS, INFORMATION PROCESSING METHOD, INFORMATION PROCESSING PROGRAM, CONTROL DEVICE, CONTROL METHOD AND CONTROL PROGRAM**

(30) Priority: 29.01.2019 JP 2019013281
(71) Applicant: Sony Group Corporation, 108-0075 Tokyo (JP)
(72) Inventor: KAMADA, Chie, Tokyo 108-0075 (JP); OGAWA, Hiroaki, Tokyo 108-0075 (JP); TSUNOO, Emiru, Tokyo 108-0075 (JP); TOTSUKA, Noriko, Tokyo 108-0075 (JP); TATEISHI, Kazuya, Tokyo 108-0075 (JP); KOYAMA, Yuichiro, Tokyo 108-0075 (JP); TAKAHASHI, Akira, Tokyo 108-0075 (JP); MAEDA, Yoshinori, Tokyo 108-0075 (JP); WATANABE, Hideaki, Tokyo 108-0075 (JP); FUKUI, Akira, Tokyo 108-0075 (JP); KURODA, Kan, Tokyo 108-0075 (JP); TAKEDA, Yuki, Tokyo 108-0075 (JP)
(74) Representative: 2SPL Patentanwälte PartG mbB
(86) International application number: PCT/JP2020/001898
(87) International publication number: WO 2020/158504

(57) **Abstract**

Information equipment includes: a reception unit that receives control information to control an operation of the information equipment; a detection unit that detects a living body located around the information equipment and detects a distance between the information equipment and the living body; and a determination unit that determines a response to the control information on the basis of the information detected by the detection unit.

## Description

### Field

The present disclosure relates to information equipment, an information processing method, an information processing program, a control device, a control method, and a control program. More specifically, the present disclosure relates to processing of controlling an operation of information equipment.

### Background

With a progress of a network technology, opportunities for a user to use a plurality of pieces of information equipment are increasing. In view of such a situation, a technology of smoothly utilizing a plurality of pieces of information equipment has been proposed.

For example, a technology of giving priority to operation by an operation terminal, which starts operation first, when equipment at home is operated remotely by a plurality of operation terminals has been known (for example, Patent Literature 1). Also, a technology of determining operation contents according to attribute information of a user who intends to perform operation (for example, Patent Literature 2) has been known. Also, a technology of determining which request is to be preferentially processed according to a context such as time or a place in a case where a new request is input into a smart speaker (for example, Patent Literature 3) has been known.

### Citation List

### Patent Literature

Patent Literature 1: JP 2015-82778 A
Patent Literature 2: JP 2017-123518 A
Patent Literature 3: WO 2018/139036

### Summary

### Technical Problem

According to the above conventional technologies, a user can smoothly operate a plurality of pieces of information equipment such as home appliances.

However, there is room for improvement in the conventional technologies. For example, in the conventional technologies, only an attribute of a user who tries to perform operation, order of the operation, time and a position of the operation, and the like are considered. Thus, in the conventional technologies, appropriate processing is not necessarily performed according to an actual usage situation, for example, in a case where a user who is actually using a home appliance or the like and another user who tries to perform operation interfere with each other.

Thus, the present disclosure proposes information equipment, an information processing method, an information processing program, a control device, a control method, and a control program that can perform appropriate processing according to an actual usage situation of equipment. Solution to Problem

According to the present disclosure, an information equipment includes a reception unit that receives control information to control an operation of the information equipment; a detection unit that detects a living body located around the information equipment and detects a distance between the information equipment and the living body; and a determination unit that determines a response to the control information on the basis of the information detected by the detection unit.

According to the present disclosure, a control device includes a receiving unit that receives a request for controlling information equipment from a first user; an acquisition unit that acquires information related to a living body located around the information equipment that is a target of the request, and information related to a distance between the information equipment and the living body; and a generation unit that generates control information corresponding to the request on the basis of the information acquired by the acquisition unit.

### Brief Description of Drawings

FIG. 1 is a view illustrating an example of information processing according to a first embodiment.
FIG. 2 is a view illustrating a configuration example of an information processing system according to the first embodiment.
FIG. 3 is a view illustrating a configuration example of a control device according to the first embodiment.
FIG. 4 is a view illustrating an example of an information equipment table according to the first embodiment.
FIG. 5 is a view illustrating an example of a relay equipment table according to the first embodiment.
FIG. 6 is a view illustrating a configuration example of information equipment according to the first embodiment.
FIG. 7 is a view illustrating an example of a user information table according to the first embodiment.
FIG. 8 is a view illustrating an example of a response table according to the first embodiment.
FIG. 9 is a flowchart (1) illustrating a flow of processing according to the first embodiment.
FIG. 10 is a flowchart (2) illustrating a flow of the processing according to the first embodiment.
FIG. 11 is a view illustrating a configuration example of an information processing system according to a second embodiment.
FIG. 12 is a view illustrating an example of a relay equipment table according to the second embodiment.
FIG. 13 is a view illustrating a configuration example of an information processing system according to a third embodiment.
FIG. 14 is a hardware configuration diagram illustrating an example of a computer that realizes a function of information equipment.

### Description of Embodiments

In the following, embodiments of the present disclosure will be described in detail on the basis of the drawings. Note that in each of the following embodiments, overlapped description is omitted by assignment of the same reference sign to identical parts.

The present disclosure will be described in the following order of items.
1. First embodiment
   1-1. Example of information processing according to the first embodiment
   1-2. Configuration of an information processing system according to the first embodiment
   1-3. Configuration of a control device according to the first embodiment
   1-4. Configuration of information equipment according to the first embodiment
   1-5. Procedure of the information processing according to the first embodiment
   1-6. Modification example according to the first embodiment
2. Second embodiment
3. Third embodiment
4. Other embodiments
5. Effect of a control device according to the present disclosure
6. Hardware configuration

### (1. First embodiment)

[1-1. Example of information processing according to the first embodiment]

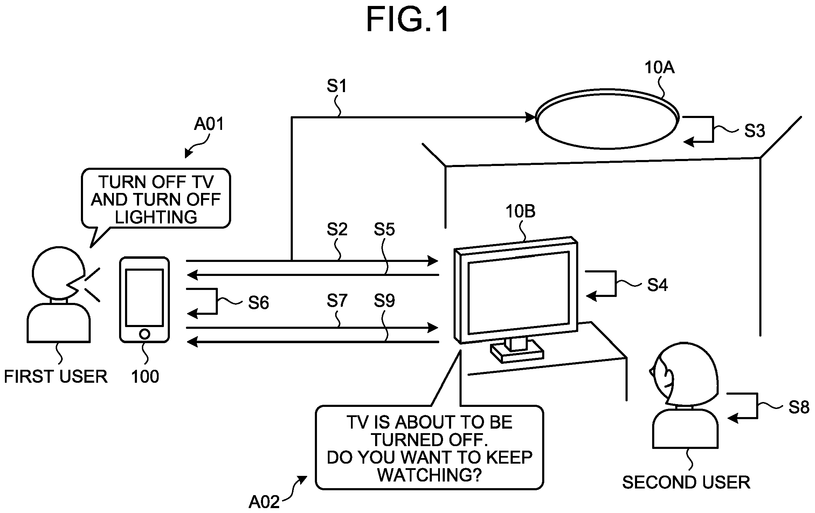

An example of information processing according to the first embodiment of the present disclosure will be described with reference to FIG. 1. FIG. 1 is a view illustrating an example of the information processing according to the first embodiment. In FIG. 1, information processing executed by a control device 100, and lighting 10A and a TV 10B that are examples of information equipment according to the present disclosure is illustrated as an example of the information processing according to the first embodiment of the present disclosure.

In the example illustrated in FIG. 1, the control device 100 is communicably connected with the lighting 10A and the TV 10B via a wireless network (not illustrated).

The control device 100 is an example of a control device according to the present disclosure. For example, the control device 100 has a function of having a dialogue with a user via speech or text (referred to as an agent function or the like), and performs various kinds of information processing such as speech recognition and response generation to a user. Also, the control device 100 controls information equipment connected via a network. That is, the control device 100 plays a role of performing various kinds of control with respect to information equipment such as a so-called Internet of Things (IoT) device in response to a request from a user who uses the agent function. The control device 100 is, for example, a smart phone, a tablet terminal, or the like. Note that other than the smart phone or tablet terminal, the control device 100 may be a wearable device such as a watch-type terminal or a glasses-type terminal. Also, in the following description, a user who uses the control device 100 is referred to as a "first user" for the sake of distinction.

The lighting 10A and TV 10B are examples of information equipment according to the present disclosure. The lighting 10A and the TV 10B are equipment called IoT devices, smart home appliances, or the like, and perform various kinds of information processing in cooperation with external equipment such as the control device 100. For example, the lighting 10A and the TV 10B receive control information from the control device 100 and perform an operation according to the received control information. Specifically, the lighting 10A and the TV 10B perform an on/off operation of power, or change an output mode according to the control information. Also, instead of being controlled by the control device 100, the lighting 10A and the TV 10B may be directly controlled by a user, for example, on the basis of an agent function included in the lighting 10A and the TV 10B. In the following, in a case where there is no need to be distinguished from each other, pieces of information equipment that can be controlled by the control device 100 and that are, for example, the lighting 10A and the TV 10B are collectively referred to as "information equipment 10". The information equipment 10 is not limited to the lighting 10A and the TV 10B, and may be realized by various smart devices having an information processing function. For example, the information equipment 10 may be a smart home appliance such as an air conditioner or a refrigerator, a smart vehicle such as an automobile, a drone, or an autonomous robot such as a pet robot or a humanoid robot. Note that in the following description, a user who uses the information equipment 10 is referred to as a "second user" for the sake of distinction.

In the example illustrated in FIG. 1, it is assumed that the first user and the second user are residents living in the same house, the first user is out, and the second user is in a room. As described above, the first user can control the lighting 10A and the TV 10B in the house even from an outing destination via the agent function of the control device 100. In such a manner, there are various problems in order to perform appropriate operation in a situation in which a plurality of pieces of information equipment 10 is used by the first user and the second user.

For example, conventionally, a home appliance installed at home is generally controlled by an operation button included in the home appliance itself, a remote controller corresponding to each home appliance, or the like. However, according to equipment that can control a home appliance via a network and that is, for example, the control device 100, the first user can operate a home appliance from a room, which is different from a room where the home appliance is installed, or from the outing destination. In this case, the first user operates the home appliance without noticing presence of the second user who is actually using the home appliance.

That is, while the first user can respond to forgetting to turn off power of a home appliance or can turn on power of a home appliance in advance before returning home by operating the home appliance from a distant place, there is a possibility of operating a home appliance without noticing presence of the second user. As a result, the second user who is actually using the home appliance may suffer inconvenience or a loss that an unexpected operation is performed or utilization of the home appliance becomes impossible.

Thus, the information equipment 10 and the control device 100 according to the present disclosure solve the above problems by information processing described in the following.

Specifically, in a case of receiving control information to control an operation of the information equipment 10, the information equipment 10 according to the present disclosure detects a living body located around and detects a distance between the information equipment 10 and the living body. Then, the information equipment 10 determines a response to the control information on the basis of the detected information. For example, in a case where the second user is located around, even in a case where control information such as "turn off the power of the information equipment 10" is received, the information equipment 10 keeps the usage by the second user by rejecting a request by the control information. That is, the information equipment 10 senses surroundings, detects presence of a person in the surroundings when there is one, and preferentially receives operation by a nearby person compared to operation from a distance. Note that in a case where there is not the second user near the information equipment 10, the information equipment 10 receives operation by the first user. In other words, the information equipment 10 performs processing of giving the first user or the second user priority of operation in a home appliance such as the information equipment 10.

Also, the above processing may be performed not by a side of the information equipment 10 but by the control device 100. Specifically, when receiving a request for controlling the information equipment 10 from the first user, the control device 100 according to the present disclosure acquires information related to a living body located around the information equipment 10 that is a target of the request, and information related to a distance between the information equipment 10 and the living body. Then, the control device 100 generates control information corresponding to the request on the basis of the acquired information. For example, even in a case of receiving a request such as to "turn off the power of the information equipment 10" from the first user, when detecting that the second user is located near the information equipment 10, the control device 100 generates control information of rejecting the request. As a result, the control device 100 transmits the control information of keeping the power of the information equipment 10 to the information equipment 10 regardless of the request of the first user. Thus, the power of the information equipment 10 is prevented from being turned off contrary to intention of the second user.

In such a manner, by selecting a user to be prioritized with respect to operation of the information equipment 10, the information equipment 10 and the control device 100 according to the present disclosure provide a method of home appliance operation that does not give the first user and the second user stress.

In the following, an example of information processing of the first embodiment according to the present disclosure will be described along a flow with reference to FIG. 1. Note that it is assumed that each of the lighting 10A and the TV 10B includes a sensor that detects presence of the second user (such as biological sensor or motion sensor), and a sensor that detects a distance from each of the lighting 10A and the TV 10B to the second user (such as ranging sensor) in the first embodiment.

First, an example in which the control device 100 plays a central role and executes the information processing of the first embodiment according to the present disclosure will be described. As illustrated in FIG. 1, the control device 100 receives speech A01 "turn off the TV and turn off the lighting" from the first user who is out.

The control device 100 starts the information processing in response to the reception of the speech A01. Specifically, the control device 100 acquires the speech A01, undergoes automatic speech recognition (ASR) processing and natural language understanding (NLU) processing, and analyzes speech intention of the user which intention is included in the speech A01.

For example, the control device 100 analyzes whether a name of the information equipment 10 registered in advance by the first user matches the contents spoken by the user. For example, it is assumed that the first user previously registers speech "lighting" and the "lighting 10A installed at home of the first user" into a database in the control device 100 in association with each other. Also, it is assumed that the first user registers speech "TV" and the "TV 10B installed at the home of the first user" into the database in the control device 100 in association with each other. In this case, the control device 100 can recognize that the speech A01 is a request for the information equipment 10 registered in advance when the speech by the user includes "lighting" and "TV" and includes a request for controlling an operation thereof (speech "turn off" in the example of FIG. 1). Note that since various known technologies may be used for such ASR processing and NLU processing, detailed description thereof will be omitted.

When recognizing that the speech A01 relates to a request for the lighting 10A and the TV 10B, the control device 100 identifies the lighting 10A and the TV 10B that are targets of the request. Then, the control device 100 controls the identified lighting 10A and TV 10B to detect (sense) a situation of a surrounding (Step S1 and Step S2). Specifically, the control device 100 requests the lighting 10A and the TV 10B to detect whether a living body such as a person is located around and how far the living body is located.

According to the request from the control device 100, the lighting 10A detects a living body in a room where the control device 100 is installed by using a motion sensor or the like included in the control device 100 (Step S3). For example, the lighting 10A detects that the second user is located in the room where the lighting 10A is installed, a distance from the lighting 10A to the second user, and the like, and acquires the detected information.

Similarly, according to the request from the control device 100, the TV 10B detects a living body in a room where the TV 10B is installed by using a motion sensor or the like included in the TV 10B (Step S4). For example, the TV 10B detects that the second user is located in the room where the TV 10B is installed, a distance from the TV 10B to the second user, and the like, and acquires the detected information. Note that by using a function such as a camera included in the TV 10B, the TV 10B may acquire that the second user is watching the TV 10B, a direction of a body of the second user to the TV 10B, and the like.

Then, the lighting 10A and the TV 10B transmit the detected information to the control device 100 (Step S5) .

From the lighting 10A and the TV 10B, the control device 100 acquires information that the second user is located around the lighting 10A and the TV 10B, information related to the distance from the lighting 10A and the TV 10B to the second user, and the like. Then, on the basis of the acquired information, the control device 100 generates control information corresponding to the request received from the first user (Step S6). This control information includes, for example, contents of an operation actually executed by the lighting 10A and the TV 10B. For example, the control information is information to cause control of turning on/off of the power of the lighting 10A and the TV 10B, information of increasing/decreasing illuminance of the lighting 10A or of increasing/decreasing volume output from the TV 10B, or the like.

In a case of generating the above control information, for example, the control device 100 refers to a condition registered in advance by the first user and the second user. The registered condition is information that indicates a condition of enabling remote operation and that is, for example, to "permit remote operation on the information equipment 10 only in a case where the second user is not located near the information equipment 10".

For example, it is assumed that a condition such as "lighting is not turned off in a case where the second user is located in an installed room" is registered in the control device 100 with respect to the lighting 10A. This is because the second user suffers inconvenience when the lighting 10A is controlled to be turned off by remote operation. Also, it is assumed that a condition such as "a response candidate such as whether to turn off the TV 10B is presented in a case where the second user is located within 5 meters from the TV 10B" is registered in the control device 100 with respect to the TV 10B. This is because the second user suffers inconvenience when the TV 10B is controlled to be turned off by remote operation. Note that a condition such as "the TV 10B is turned off in a case where the second user is located more than 5 meters away from the TV 10B" may be registered in the control device 100 with respect to the TV 10B. This means it is highly likely that the second user who is away from the TV 10B for more than a predetermined distance is not watching the TV 10B. Note that as described later, a condition may be such that "the TV 10B is not turned off in a case where the user is facing (looking at) the TV 10B". Also, for example, a value of the distance between the second user and the TV 10B in the condition may be arbitrarily set by the first user or the second user, or may be automatically set on the basis of a size of a display of the TV 10B, or the like.

As described above, the control device 100 refers to the information acquired in Step S5 and the registered information, and generates control information to cause the lighting 10A and the TV 10B to perform an operation corresponding to the condition. Specifically, with respect to the lighting 10A, the control device 100 generates control information to perform control in such a manner as not to turn off the power regardless of the request of the first user. Also, with respect to the TV 10B, the control device 100 generates control information to perform control in such a manner as to present, to the second user, whether to turn off the power regardless of the request of the first user.

Then, the control device 100 transmits the generated control information to the lighting 10A and the TV 10B (Step S7).

The lighting 10A that receives the control information generated in Step S7 keeps the power on regardless of the request of the first user which request is based on the speech A01. In other words, the control device 100 rejects the request of the first user according to the presence of the second user.

Also, the TV 10B that receives the control information generated in Step S7 presents response candidates for the control information, such as "the TV is about to be turned off. Do you want to keep watching?" to the second user regardless of the request of the first user which request is based on the speech A01. The second user can select a response he/she desires from the presented response candidates.

That is, the control device 100 gives the second user priority (authority) of operation with respect to the TV 10B. In other words, in a case where the TV 10B is about to be operated from the outside, the control device 100 provides a means with which the second user in the room can cancel the processing. Note that as presentation of the response candidates, the TV 10B may output speech having contents such as "the TV is about to be turned off. Do you want to keep watching?" or may display a screen of text data such as "the TV is about to be turned off. Do you want to keep watching?"

In this case, the second user selects his/her desired response by using, for example, speech or a remote controller for the TV 10B (Step S8). Specifically, for example, the second user speaks "do not turn off the power" and inputs speech indicating intention to keep watching into the TV 10B. According to the information input from the second user, the TV 10B gives priority to the demand from the second user to "keep the power of the TV 10B on" and rejects the request from the first user to "turn off the TV 10B".

Subsequently, the lighting 10A and the TV 10B transmit, to the control device 100, contents of the operation executed with respect to the control information (Step S9). For example, to the control device 100, the lighting 10A transmits that the power is kept on. Also, the TV 10B transmits, to the control device 100, that the power is kept on according to the request from the second user.

The control device 100 notifies the first user who inputs the speech A01 of the contents of the processing actually executed in the lighting 10A and the TV 10B. Specifically, with speech or a screen display, the control device 100 presents, to the first user, that the power is kept on in the lighting 10A and the TV 10B since the second user is located near the lighting 10A and the TV 10B. As a result, the first user can perceive that his/her request is rejected, the second user is located near the lighting 10A and the TV 10B, and the like.

As described above, the control device 100 receives a request for controlling the information equipment 10 from the first user, and also acquires information related to the second user located around the information equipment 10 that is a target of the request, and information related to a distance between the information equipment 10 and the second user. Then, the control device 100 generates control information corresponding to the request on the basis of the acquired information.

That is, the control device 100 generates control information to control the information equipment 10 on the basis of the information detected by the information equipment 10. Thus, the control device 100 can be prevented from transmitting, to the information equipment 10, control information that causes inconvenience to the second user and that is, for example, to turn off the power of the information equipment 10 although there is the second user using the information equipment 10. As a result, the control device 100 can perform appropriate processing according to an actual usage situation of the information equipment 10.

Next, with reference to FIG. 1, an example in which the information equipment 10 plays a central role and executes the information processing of the first embodiment according to the present disclosure will be described.

The control device 100 receives speech A01 "turn off the TV and turn off the lighting" from the first user who is out. In this case, the control device 100 generates control information for the lighting 10A and the TV 10B. Specifically, the control device 100 generates each of control information causing an operation of turning off the power of the lighting 10A and control information causing an operation of turning off the power of the TV 10B. Then, the control device 100 transmits the generated control information to the lighting 10A and the TV 10B (Step S1 and Step S2).

When receiving the control information from the control device 100, the lighting 10A detects a living body in the room where the lighting 10A is installed by using a motion sensor or the like included in the lighting 10A (Step S3).

Similarly, when receiving the control information from the control device 100, the TV 10B detects a living body in the room where the TV 10B is installed by using the motion sensor or the like included in the TV 10B (Step S4). Note that in a case where the information equipment 10 plays a central role and executes the information processing, the processing in Step S5 to Step S7 does not need to be executed.

Then, the lighting 10A and the TV 10B determine a response to the control information on the basis of the detected information. Specifically, the lighting 10A refers to the condition registered in advance by the first user and the second user, and determines whether the detected information matches the condition.

For example, it is assumed that the lighting 10A registers a condition such as "lighting is not turned off in a case where the second user is located in an installed room" in the database of the lighting 10A. Also, it is assumed that a condition such as "a response candidate such as whether to turn off the TV 10B is presented in a case where the second user is located within 5 meters from the TV 10B" is registered in the TV 10B.

Then, the lighting 10A and the TV 10B refer to the information detected in Step S3 or Step S4 and the registered information, and determine to execute an operation that matches the condition. Specifically, the lighting 10A determines to operate in such a manner as not to turn off the power regardless of the request of the first user (control information transmitted from the control device 100).

Also, regardless of the request of the first user, the TV 10B determines to operate in such a manner as to present, to the second user, whether to turn off the power. Specifically, to the second user, the TV 10B presents response candidates for the control information, such as "the TV is about to be turned off. Do you want to keep watching?" The second user can select a response he/she desires from the presented response candidates.

That is, in a case of receiving the control information from the control device 100, the lighting 10A and the TV 10B detect a surrounding situation, and determine priority (authority) of the operation for the lighting 10A and the TV 10B on the basis of the detected information. For example, the lighting 10A provides a means to reject (cancel) control information from the outside in view of a situation of the second user in the room in a case where the power of the lighting 10A is about to be turned off from the outside. Also, in a case where the TV 10B is about to be operated from the outside, the TV 10B provides a means with which the second user in the room can cancel the processing.

In this case, the second user selects his/her desired response by using, for example, speech or a remote controller for the TV 10B (Step S8). Specifically, for example, the second user speaks "do not turn off the power" and inputs speech indicating intention to keep watching into the TV 10B. According to the information input from the second user, the TV 10B gives priority to the demand from the second user to "keep the power of the TV 10B on" and rejects the request by the control information to "turn off the TV 10B".

Subsequently, the lighting 10A and the TV 10B transmit, to the control device 100, contents of the operation executed with respect to the control information (Step S9). For example, to the control device 100, the lighting 10A transmits that the power is kept on. Also, the TV 10B transmits, to the control device 100, that the power is kept on according to the request from the second user.

The control device 100 notifies the first user who inputs the speech A01 of the contents of the processing actually executed in the lighting 10A and the TV 10B. Specifically, with speech or a screen display, the control device 100 presents, to the first user, that the power is kept on in the lighting 10A and the TV 10B since the second user is located near the lighting 10A and the TV 10B. As a result, the first user can perceive that his/her request is rejected, the second user is located near the lighting 10A and the TV 10B, and the like.

As described above, when receiving the control information to control the operation of the information equipment 10, the information equipment 10 detects the second user located around and also detects a distance between the information equipment 10 and the second user. Then, the information equipment 10 determines a response to the control information on the basis of the detected information.

That is, even in a case of receiving control information that causes inconvenience to the second user and that is, for example, to turn off the power even though the second user is present nearby, the information equipment 10 can provide the second user with a choice of a response such as not receiving control by the control information. As a result, the information equipment 10 can perform appropriate processing according to an actual usage situation.

### [1-2. Configuration of an information processing system according to the first embodiment]

Subsequently, a configuration of the information processing system 1 including the information equipment 10, the control device 100, and the like according to the first embodiment described above will be described.

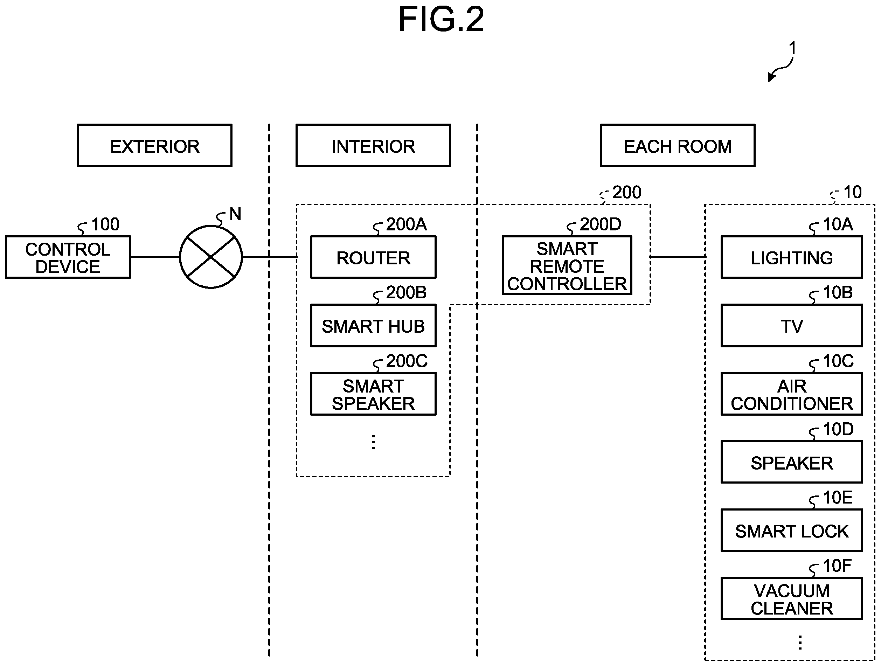

As illustrated in FIG. 2, the information processing system 1 includes the information equipment 10, the control device 100, and relay equipment 200. The information equipment 10, the control device 100, and the relay equipment 200 are communicably connected in a wired or wireless manner via a network N (such as the Internet) illustrated in FIG. 2. Note that the number of devices included in the information processing system 1 is not limited to what is illustrated in FIG. 2.

The control device 100 is an information processing terminal to control a home appliance and the like at home from an outing destination or the like. For example, the control device 100 is a smart phone or a tablet terminal. Note that the control device 100 may control a home appliance and the like not only from the exterior such as an outing destination but also from the home (interior) or each room.

The relay equipment 200 is information equipment that relays communication between the control device 100 and the information equipment 10. As illustrated in FIG. 2, the relay equipment 200 includes, for example, a router 200A, a smart hub 200B, a smart speaker 200C, a smart remote controller 200D, and the like. In the following description, in a case of not needing to be distinguished from each other, pieces of the relay equipment such as the router 200A and the smart hub 200B are collectively referred to as the "relay equipment 200".

The relay equipment 200 relays communication between the control device 100 and the information equipment 10 by using, for example, a home network such as LAN or Wi-Fi (registered trademark), wireless communication based on a communication standard such as ZigBee or Bluetooth (registered trademark), infrared communication, or the like. For example, instead of the information equipment 10 that cannot directly receive control information transmitted from the control device 100, the relay equipment 200 receives the control information from the control device 100. Then, the relay equipment 200 transmits the control information received from the control device 100 to specific information equipment 10.

The information equipment 10 is equipment installed in each room in the interior and is, for example, a smart home appliance or the like. As illustrated in FIG. 2, the information equipment 10 includes, for example, the lighting 10A, the TV 10B, an air conditioner 10C, a speaker 10D, a smart lock 10E, a vacuum cleaner 10F, and the like. For example, the information equipment 10 includes a sensor to detect a living body located near the information equipment 10 or in a room where the information equipment 10 is installed, a sensor to detect a distance to the detected living body, and the like. Also, the information equipment 10 may include, as a sensor, a camera to recognize an image of a living body, a microphone to acquire speech emitted by the living body, or the like.

Also, although not illustrated in FIG. 2, the information processing system 1 may include a cloud server or the like that provides various kinds of information to the information equipment 10 in a case where the control device 100 and the information equipment 10 directly communicate with each other via Wi-Fi. That is, the information processing system 1 may include various kinds of communication equipment necessary to realize the information processing according to the present disclosure.

[1-3. Configuration of a control device according to the first embodiment]

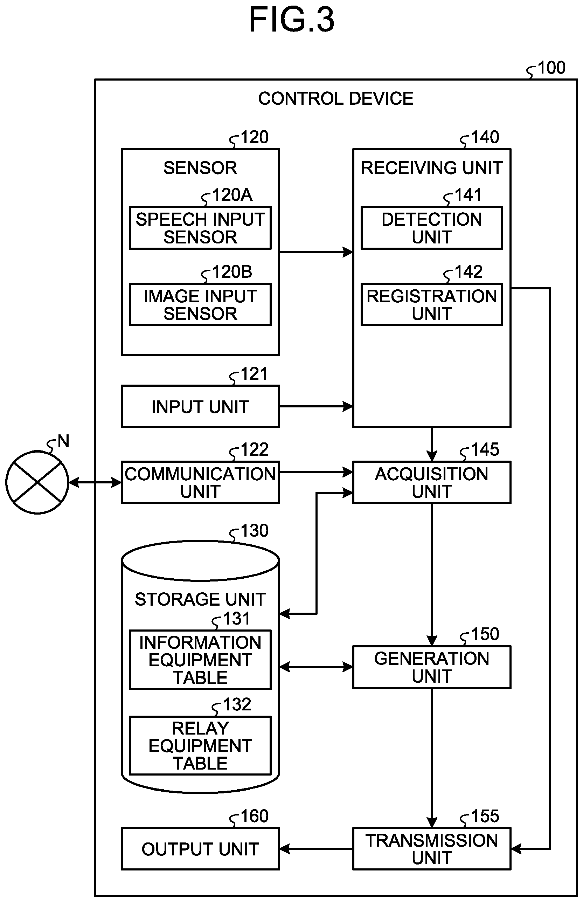

Next, a configuration of the control device 100 according to the first embodiment will be described with reference to FIG. 3. FIG. 3 is a view illustrating a configuration example of the control device 100 according to the first embodiment.

As illustrated in FIG. 3, the control device 100 includes a sensor 120, an input unit 121, a communication unit 122, a storage unit 130, a receiving unit 140, an acquisition unit 145, a generation unit 150, a transmission unit 155, and an output unit 160.

The sensor 120 is a device to detect various kinds of information. The sensor 120 includes, for example, a speech input sensor 120A that collects speech spoken by a user. The speech input sensor 120A is, for example, a microphone. Also, the sensor 120 includes, for example, an image input sensor 120B. The image input sensor 120B is, for example, a camera to capture a user or a situation at home of the user.

Also, the sensor 120 may include an acceleration sensor, a gyroscope sensor, or the like. Also, the sensor 120 may include a sensor that detects a current position of the control device 100. For example, the sensor 120 may receive radio waves transmitted from a global positioning system (GPS) satellite and detect positional information (such as latitude and longitude) indicating the current position of the control device 100 on the basis of the received radio waves.

Also, the sensor 120 may include a radio wave sensor that detects radio waves emitted by an external device, an electromagnetic wave sensor that detects electromagnetic waves, and the like. Also, the sensor 120 may detect an environment in which the control device 100 is placed. Specifically, the sensor 120 may include an illuminance sensor that detects illuminance around the control device 100, a humidity sensor that detects humidity around the control device 100, a geomagnetic sensor that detects a magnetic field at a location of the control device 100, and the like.

Also, the sensor 120 is not necessarily included inside the control device 100. For example, the sensor 120 may be installed outside the control device 100 as long as sensed information can be transmitted to the control device 100 by utilization of communication or the like.

The input unit 121 is a device to receive various kinds of operation from the user. For example, the input unit 121 is realized by a keyboard, a mouse, a touch panel, or the like.

The communication unit 122 is realized, for example, by a network interface card (NIC) or the like. The communication unit 122 is connected to the network N in a wired or wireless manner, and transmits/receives information to/from the information equipment 10, the relay equipment 200, and the like via the network N.

The storage unit 130 is realized by a semiconductor memory element such as a random access memory (RAM) or a flash memory, or a storage device such as a hard disk or an optical disk, for example. The storage unit 130 has an information equipment table 131 and a relay equipment table 132. In the following, each data table will be described in order.

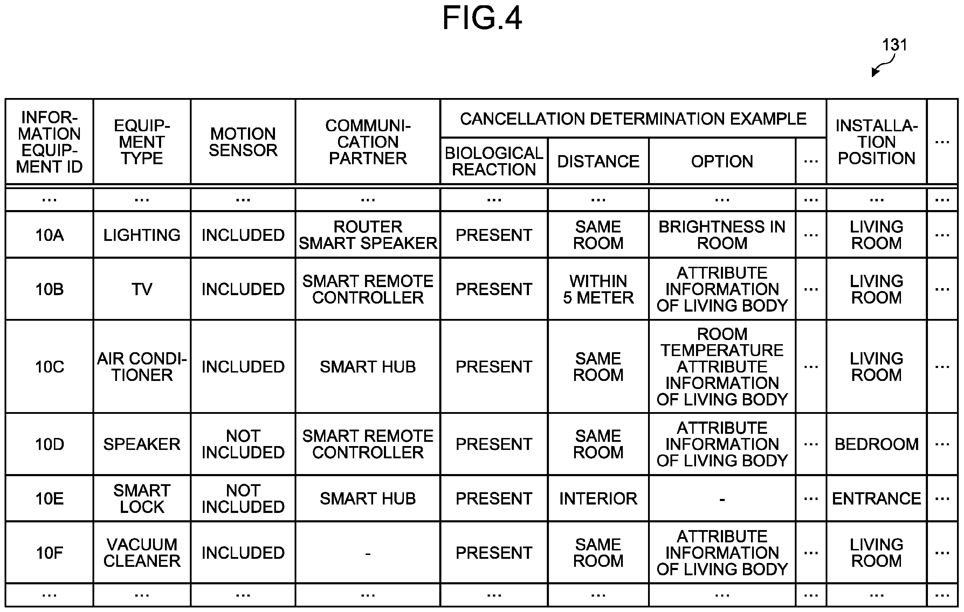

The information equipment table 131 stores information of the information equipment 10 controlled by the control device 100. In FIG. 4, an example of the information equipment table 131 according to the first embodiment is illustrated. FIG. 4 is a view illustrating an example of the information equipment table 131 according to the first embodiment. In the example illustrated in FIG. 4, the information equipment table 131 has items such as an "information equipment ID", an "equipment type", a "motion sensor", a "communication partner", a "cancellation determination example", and an "installation position". Also, the "cancellation determination example" includes sub-items such as a "biological reaction", a "distance", and an "option".

The "information equipment ID" indicates identification information that identifies the information equipment 10. Note that it is assumed that the information equipment ID and a reference sign of the information equipment 10 are common in the description. For example, the information equipment 10 identified by the information equipment ID "10A" means the "lighting 10A".

The "equipment type" indicates a type of the information equipment 10. The "motion sensor" indicates information whether the information equipment 10 includes a motion sensor. The "communication partner" indicates a type of the relay equipment 200 that relays communication between the information equipment 10 and the control device 100. Note that in a case where the item of the "communication partner" is blank, it is indicated that the information equipment 10 and the control device 100 can directly communicate with each other.

The "cancellation determination example" indicates an example of a condition of a case where the control device 100 cancels a request from the first user when generating control information. The "biological reaction" indicates whether detection of a biological reaction is a condition in the cancellation determination. The "distance" indicates a condition of a distance from the biological reaction in the cancellation determination. Note that the condition of a distance may not be a specific numerical value, but may be information that defines a spatial relationship between the information equipment 10 and the living body and that indicates, for example, the "living body is in the same room". The "option" indicates a condition to be considered in the cancellation determination in addition to the biological reaction and the distance. The cancellation determination example described above may be arbitrarily set by the first user and the second user, or may be set by each manufacturer or the like that provides the information equipment 10. The "installation position" indicates a position where the information equipment 10 is installed at home.

That is, in FIG. 4, as an example of the information registered in the information equipment table 131, it is indicated that the information equipment 10 having the information equipment ID "10A" is the "lighting 10A" and includes a motion sensor. Also, an example of a communication partner of the lighting 10A is a "router" or a "smart speaker". Also, it is indicated that an example of a condition in which the lighting 10A cancels a request of the first user is that the biological reaction is "present" and the living body and the lighting 10A are in the "same room". Also, for the lighting 10A, an option that the request of the first user may or may not be canceled depending on brightness in a room is set. For example, it is set for the lighting 10A that the control information to "turn off the power of the lighting 10A" does not need to be canceled as long as brightness in the room is kept at predetermined brightness or higher even when the power of the lighting 10A is turned off. Also, an installation position of lighting 10A is a "living room".

Also, as another example of the information registered in the information equipment table 131, it is indicated that the information equipment 10 having the information equipment ID "10B" is the "TV 10B" and includes a motion sensor. Also, an example of a communication partner of the TV 10B is a "smart remote controller". Also, it is indicated that an example of the condition in which the TV 10B cancels the request of the first user is that a biological reaction is "present" and a distance between the living body and the TV 10B is "within 5 meters". Also, for the TV 10B, an option that the request of the first user may or may not be canceled depending on attribute information of the living body is set. For example, it is set that the TV 10B does not needs to cancel the control information to "turn off the power of the TV 10B" in a case where a watching second user is a child or the living body is a non-human (such as pet). Also, an installation position of the TV 10B is a "living room".

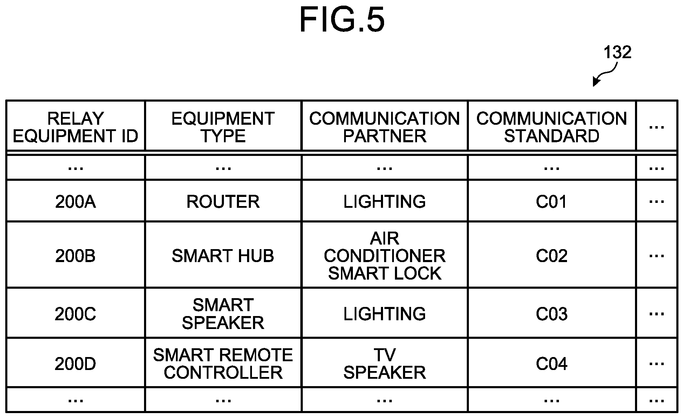

Next, the relay equipment table 132 will be described. FIG. 5 is a view illustrating an example of the relay equipment table 132 according to the first embodiment. In the example illustrated in FIG. 5, the relay equipment table 132 has items such as a "relay equipment ID", an "equipment type", a "communication partner", and a "communication standard".

The "relay equipment ID" indicates identification information that identifies the relay equipment 200. Note that it is assumed that the relay equipment ID and a reference sign of the relay equipment 200 are common in the description. For example, the relay equipment 200 identified by the relay equipment ID "200A" means the "router 200A".

The "equipment type" indicates a type of the relay equipment 200. The "communication partner" indicates a type of the information equipment 10 to which communication with the control device 100 is relayed. The "communication standard" indicates a communication standard that the relay equipment 200 can support. In the example illustrated in FIG. 5, an item of the communication standard is conceptually described as "C01" or the like. However, in reality, information related to a communication standard such as Wi-Fi, ZigBee, or Bluetooth is stored in the item of the communication standard.

That is, in FIG. 5, as an example of the information registered in the relay equipment table 132, it is indicated that relay equipment 200 having the relay equipment ID "200A" is the "router 200A", a communication partner is the "lighting", and a communication standard is "C01".

Returning to FIG. 3, the description is continued. The receiving unit 140, the acquisition unit 145, the generation unit 150, and the transmission unit 155 are processing units that execute the information processing executed by the control device 100. The receiving unit 140, the acquisition unit 145, the generation unit 150, and the transmission unit 155 are realized, for example, when a program stored in the control device 100 (such as control program according to the present disclosure) is executed, with a random access memory (RAM) or the like as a work area, by a central processing unit (CPU), a micro processing unit (MPU), a graphics processing unit (GPU), or the like. Also, the receiving unit 140, the acquisition unit 145, the generation unit 150, and the transmission unit 155 may be controllers and may be realized by an integrated circuit such as an application specific integrated circuit (ASIC) or a field programmable gate array (FPGA), for example.

The receiving unit 140 is a processing unit that receives various kinds of information. For example, the receiving unit 140 receives a request for controlling the information equipment 10 from the first user. As illustrated in FIG. 3, the receiving unit 140 includes a detection unit 141 and a registration unit 142.

The detection unit 141 detects various kinds of information via the sensor 120. For example, via the speech input sensor 120A that is an example of the sensor 120, the detection unit 141 detects speech spoken by the user.

Also, the detection unit 141 may perform meaning understanding processing of the detected speech. Specifically, the detection unit 141 performs automatic speech recognition (ASR) processing or natural language understanding (NLU) processing with respect to the speech spoken by the first user. For example, the detection unit 141 decomposes the speech of the first user into morphemes through the ASR or NLU, and determines what kind of intention or attribute each morpheme has.

Note that in a case where intention of the user cannot be understood as a result of the speech analysis, the detection unit 141 may pass that result to the output unit 160. For example, in a case where the analysis result includes intention that cannot be estimated from the speech of the user, the detection unit 141 passes the contents to the output unit 160. In this case, the output unit 160 outputs a response requesting the user speak correctly again (such as speech indicating "please say that again") with respect to the unclear information.

Also, via the image input sensor 120B, the acceleration sensor, the infrared sensor, and the like, the detection unit 141 may detect face information of the user, and various kinds of information that are related to a movement of the user and that are, for example, a direction, inclination, movement, moving speed, or the like of a body of the user. That is, the detection unit 141 may detect, as contexts, various physical quantities such as positional information, acceleration, temperature, gravity, rotation (angular velocity), illuminance, geomagnetism, pressure, proximity, humidity, and a rotation vector via the sensor 120.

Also, the detection unit 141 may detect information related to communication. For example, the detection unit 141 may periodically detect a connection status between the control device 100 and the relay equipment 200, between the relay equipment 200 and the information equipment 10, and the like. The connection status with various kinds of equipment is, for example, information indicating whether mutual communication is established, a communication standard used for communication by each piece of equipment, and the like.

The registration unit 142 receives registration from the user via the input unit 121. For example, via a touch panel or a keyboard, the registration unit 142 receives an input of information (such as text data or the like) indicating a request to the information equipment 10.

Note that in a case of receiving a request for controlling the information equipment 10 from the first user, the receiving unit 140 identifies the information equipment 10 corresponding to the request and transmits the identified information to the transmission unit 155. The transmission unit 155 transmits a request for detecting a surrounding situation to the identified information equipment 10 on the basis of the information received by the receiving unit 140. As a result, the acquisition unit 145 (described later) can acquire information indicating the surrounding situation (for example, whether a living body is located around) detected by the information equipment 10.

The acquisition unit 145 acquires various kinds of information. Specifically, the acquisition unit 145 acquires information related to a living body located around the information equipment 10 that is a target of the request received by the receiving unit 140, and information related to a distance between the information equipment 10 and the living body. Note that the living body is, for example, the second user who is a user using the information equipment 10.

That is, by controlling a biological sensor and a ranging sensor included in equipment (information equipment 10 in this example) different from the control device 100, the acquisition unit 145 acquires the information related to the living body located around the information equipment 10 that is the target of the request, and the information related to the distance between the information equipment 10 and the living body. The biological sensor is, for example, a sensor that detects whether a living body is located on the basis of information emitted by the living body. Specifically, the biological sensor is an infrared sensor (thermography) that detects a temperature (body temperature) of the living body, an image sensor (camera) to recognize an image of the living body, and the like. Also, the ranging sensor is a distance sensor that emits light and measures a distance to the living body, an ultrasonic sensor, or the like. Note that a technology such as light detection and ranging, laser imaging detection and ranging (LiDAR) may be used for the ranging sensor, for example. Also, for measurement of the distance between the information equipment 10 and the living body, for example, a technology such as simultaneous localization and mapping (SLAM) included in the information equipment 10 may be used. As a result, the information equipment 10 can determine highly accurately whether the information equipment 10 and the living body are located in the same room.

Also, on the basis of control information generated by the generation unit 150 (described later), the acquisition unit 145 acquires a result of an operation executed by the information equipment 10. For example, the acquisition unit 145 acquires a result indicating what kind of operation is executed or not executed by the information equipment 10 according to the control information. Specifically, the acquisition unit 145 acquires a result (feedback) indicating, for example, whether the information equipment 10 actually turns off the own power in response to the control information indicating an operation such as to "turn off the power of the information equipment 10" or rejects the control by the control information without turning off the own power. The acquisition unit 145 may acquire, together with the result of the operation, information related to a cause or a reason of the operation performed by the information equipment 10, the information indicating the control is rejected because the second user is near the information equipment 10, for example.

The generation unit 150 generates control information corresponding to the request received from the first user on the basis of the information acquired by the acquisition unit 145. Note that the control information is a signal or a script (such as program) to control an operation of the information equipment 10. The generation unit 150 refers to the information related to the information equipment 10 in the information equipment table 131, and generates the control information according to a communication standard, protocol, and the like of each piece of the information equipment 10.

Specifically, the generation unit 150 determines whether the information related to the living body located around the information equipment 10 that is the target of the request, and the information related to the distance between the information equipment 10 and the living body match a previously-registered condition. Then, on the basis of a result of the determination, the generation unit 150 generates control information indicating that the requested contents are executed, or control information indicating that the request is rejected.

For example, in a case where no living body is located near the information equipment 10 in the information acquired by the acquisition unit 145, the generation unit 150 generates control information to cause the information equipment 10 to perform an operation corresponding to the request received from the first user.

Also, in a case where the information acquired by the acquisition unit 145 meets a cancellation condition registered in the information equipment table 131, for example, a case where a living body is located near the information equipment 10, the generation unit 150 generates control information indicating that the request received from the first user is rejected.

Alternatively, on the basis of the information related to the living body located around the information equipment 10 that is the target of the request and the information related to the distance between the information equipment 10 and the living body, the generation unit 150 may generate control information to control the information equipment 10 to present a candidate of a response by the information equipment 10 with respect to the control information. That is, in order to leave selection of an operation of the information equipment 10 to the second user located near the information equipment 10, the generation unit 150 generates control information of controlling the information equipment 10 to present a response candidate of the information equipment 10 to the second user. In this case, according to the control information, the information equipment 10 operates in such a manner as to present, to the second user, response candidates that can be selected by the second user (whether to turn off or keep the power) and that are, for example, "the power (of the information equipment 10) is about to be turned off. What do you want to do?"

Also, after the information equipment 10 operates according to the control information, the generation unit 150 generates information for presenting a result of the operation to the first user. For example, the generation unit 150 generates information indicating whether the operation is actually executed in the information equipment 10 the operation of which is requested by the first user. Specifically, in a case where the lighting 10A is not turned off even though the first user tries to turn off the lighting 10A, the generation unit 150 generates speech information indicating this by using text-to-speech (TTS) processing or the like, for example. Alternatively, the generation unit 150 generates a screen display indicating that the operation is not performed. In this case, the generation unit 150 outputs the generated speech information or screen display from the output unit 160.

The transmission unit 155 transmits various kinds of information. For example, in a case where the receiving unit 140 receives a request from the first user, the transmission unit 155 transmits, on the basis of the request, a request for detecting a surrounding situation to the information equipment 10.

Also, the transmission unit 155 transmits the control information generated by the generation unit 150 to each piece of the information equipment 10. Note that instead of directly exchanging information with the information equipment 10, the transmission unit 155 may transmit the control information to the relay equipment 200 such as the router 200A for which communication with the information equipment 10 is established.

The output unit 160 is a mechanism to output various kinds of information. For example, the output unit 160 is a speaker or a display. For example, the output unit 160 outputs, in speech, notification to the first user which notification is generated by the generation unit 150. Also, the output unit 160 outputs an image to the display in a case where notification to the first user which notification is generated by the generation unit 150 is a screen display (image data).

### [1-4. Configuration of information equipment according to the first embodiment]

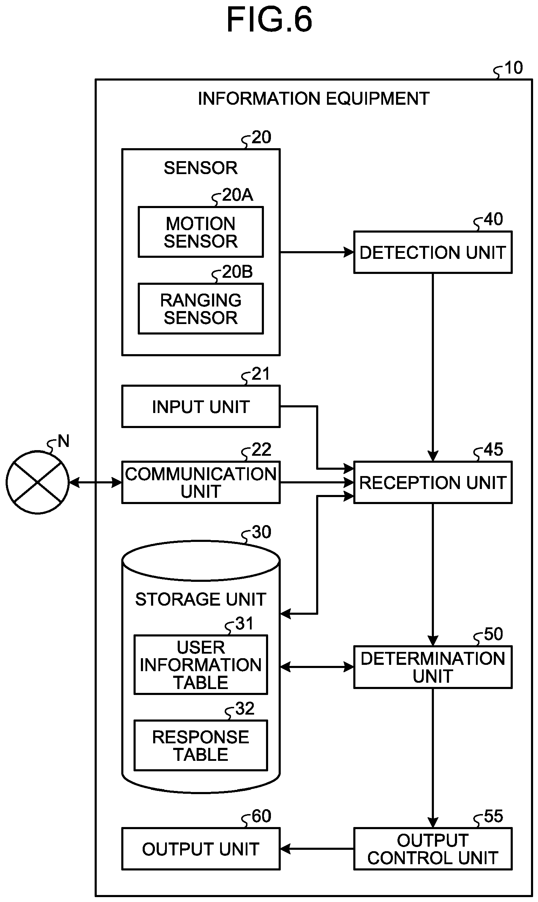

Next, a configuration of the information equipment 10 according to the first embodiment will be described with reference to FIG. 6. FIG. 6 is a view illustrating a configuration example of the information equipment 10 according to the first embodiment.

As illustrated in FIG. 6, the information equipment 10 includes a sensor 20, an input unit 21, a communication unit 22, a storage unit 30, a detection unit 40, a reception unit 45, a determination unit 50, an output control unit 55, and an output unit 60.

The sensor 20 is a device to detect various kinds of information. The sensor 20 includes, for example, a motion sensor 20A to detect a living body located near the information equipment. The motion sensor 20A is an example of a biological sensor, and is a sensor to detect information related to a living body located around the information equipment 10. Specifically, the motion sensor 20A is an infrared sensor that detects a temperature (body temperature) of the living body, an image sensor (camera) to recognize an image of the living body, and the like.

A ranging sensor 20B is a sensor to acquire information related to a distance between the information equipment 10 and the living body. The ranging sensor is a distance sensor that emits light and measures a distance to the living body, an ultrasonic sensor, or the like.

Note that similarly to the control device 100, the information equipment 10 may include a speech input sensor 120A, an image input sensor 120B, or the like as the sensor 20. Also, the sensor 20 is not necessarily included inside the information equipment 10. For example, the sensor 20 may be installed outside the information equipment 10 as long as sensed information can be transmitted to the information equipment 10 by utilization of communication or the like.

The input unit 21 is a device to receive various kinds of operation from the user. For example, the input unit 21 is realized by a keyboard, a mouse, a touch panel, or the like.

The communication unit 22 is realized, for example, by a NIC or the like. The communication unit 22 is connected to the network N in a wired or wireless manner, and transmits/receives information to/from the control device 100, the relay equipment 200, and the like via the network N.

The storage unit 30 is realized, for example, by a semiconductor memory element such as a RAM or a flash memory, or a storage device such as a hard disk or an optical disk. The storage unit 30 has a user information table 31 and a response table 32. In the following, each data table will be described in order.

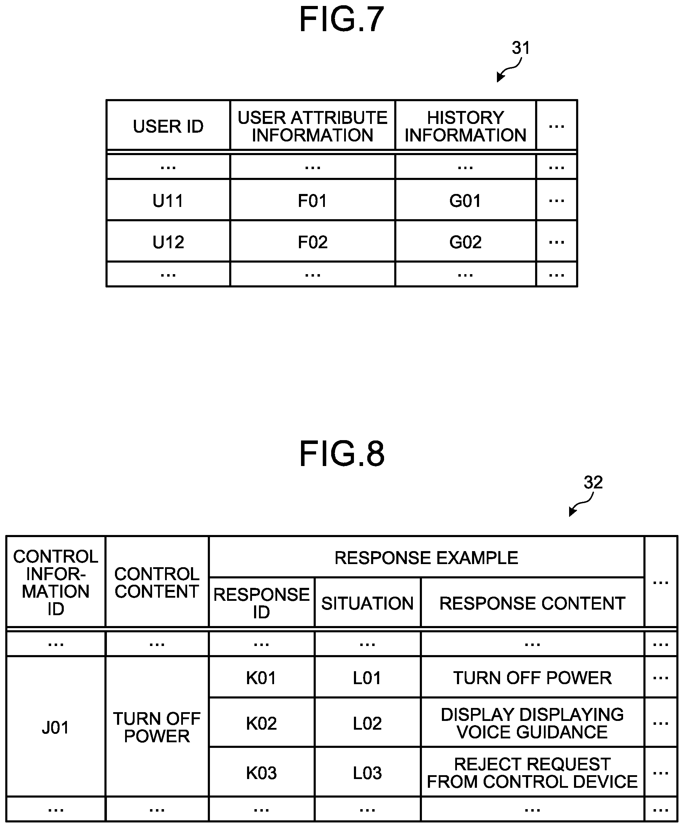

The user information table 31 stores information related to a user who uses the information equipment 10. In FIG. 7, an example of the user information table 31 according to the first embodiment is illustrated. FIG. 7 is a view illustrating an example of the user information table 31 according to the first embodiment. In the example illustrated in FIG. 7, the user information table 31 has items such as a "user ID", "user attribute information", and "history information".

The "user ID" indicates identification information that identifies a user. The "user attribute information" indicates various kinds of information of the user which information is registered by the user in utilization of the information equipment 10. In the example illustrated in FIG. 7, the item of the user attribute information is conceptually described as "F01" or the like. However, in reality, the user attribute information includes attribute information (user profile) such as an age, gender, residence, and family structure of the user. Note that the user attribute information is not limited to the information registered by the user, and may include information automatically recognized by the information equipment 10. For example, the user attribute information may include information of being presumed as a child by image recognition, information of being presumed as a man or a woman, and the like.

The "history information" indicates a usage history of the information equipment 10 by the user. In the example illustrated in FIG. 7, the item of the history information is conceptually described as "G01" or the like. However, in reality, the history information includes various kinds of information such as contents of a question by the user to the information equipment 10, a history of asking back, and a history of an output response. Also, the history information may include voiceprint information, waveform information, and the like to identify the user by speech.

That is, in the example illustrated in FIG. 7, it is indicated that a user identified by the user ID "U01" has the user attribute information "F01" and the history information "G01".

Next, the response table 32 will be described. The response table 32 stores contents of a response (operation) of when the information equipment 10 receives control information. FIG. 8 is a view illustrating an example of the response table 32 according to the first embodiment. In the example illustrated in FIG. 8, the response table 32 has items such as a "control information ID", "control contents", and a "response example". Also, the "response example" has sub-items such as a "response ID", a "situation", and "response contents".

The "control information ID" indicates identification information that identifies control information. The "control contents" indicate specific contents of a request from the first user which request is included in the control information.

The "response example" indicates an example of a response of the information equipment 10 to the control information. The "response ID" indicates identification information that identifies a response. The "situation" indicates a situation around the information equipment 10. In the example illustrated in FIG. 8, the item of the situation is conceptually described as "K01" or the like. However, in reality, specific information such as whether a living body (second user) is located around the information equipment 10, or a distance between the information equipment 10 and the second user is stored in the item of the situation. The "response contents" indicate contents of a response (operation) actually executed by the information equipment 10 with respect to the control information.

That is, in FIG. 8, as an example of the information registered in the response table 32, it is indicated that control information identified by the control information ID "J01" requests the information equipment 10 to "turn off the power". Also, as an example of a response to the control information, it is indicated that a response identified by the response ID "K01" is a response in the situation "J01" and contents thereof are to "turn off the power". For example, it is indicated that the situation "J01" is a situation in which a user is not located near the information equipment 10 and that the information equipment 10 accepts the request of the control information and turns off the power in that case.

Also, as another example of the response to the control information, it is indicated that a response identified by the response ID "K02" is a response in the situation "J02" and contents thereof is "display displaying or voice guidance". For example, it is indicated that the situation "J02" is a situation in which a user is located near the information equipment 10 and that the information equipment 10 displays contents of the control information on a display or gives voice guidance thereof and leaves selection of a response to the second user in that case.

Also, as another example of the response to the control information, it is indicated that a response identified by the response ID "K03" is a response in the situation "J03" and contents thereof are to "reject the request from the control device". For example, it is indicated that the situation "J03" is a situation in which a user is located near the information equipment 10 and is performing operation on the information equipment 10 and that the information equipment 10 does not accept contents of the control information and performs a rejection thereof in that case.

Note that the response table 32 illustrated in FIG. 8 is just an example, and each piece of the information equipment 10 may include a response table 32 in which detailed response contents are set for each of contents of control information according to a type of the information equipment 10.

Returning to FIG. 6, the description is continued. The detection unit 40, the reception unit 45, the determination unit 50, and the output control unit 55 are processing units that execute the information processing executed by the information equipment 10. The detection unit 40, the reception unit 45, the determination unit 50, and the output control unit 55 are realized, for example, when a program (such as information processing program according to the present disclosure) stored in the information equipment 10 is executed by a CPU, MPU, GPU, or the like with a RAM or the like as a work area. Also, the detection unit 40, the reception unit 45, the determination unit 50, and the output control unit 55 may be controllers, and may be realized by an integrated circuit such as an ASIC or FPGA, for example.

The detection unit 40 is a processing unit that detects various kinds of information. For example, the detection unit 40 detects a living body located around the information equipment 10, and also detects a distance between the information equipment 10 and the living body.

For example, the detection unit 40 detects the living body located around the information equipment 10 by using the motion sensor 20A, the biological sensor, or the like. Specifically, the detection unit 40 detects whether the second user who is a user using the information equipment 10 is present around the information equipment 10. Also, the detection unit 40 detects the distance to the living body by using the ranging sensor 20B or the like.

Also, as information related to the distance between the information equipment 10 and the second user, the detection unit 40 may acquire positional information indicating a position of the second user. The positional information may be information indicating a specific position such as longitude/latitude, or information indicating which room at home the second user is in. For example, the positional information may be information indicating a location of the second user, such as whether the second user is in a living room, bedroom, or children's room at home.

Also, the detection unit 40 may detect a line of sight of the detected living body, a direction of a body of the living body, or the like by recognizing an image of a surrounding situation by using a camera or the like as the sensor 20. Also, the detection unit 40 may detect attribute information or the like of the living body by the image recognition. Note that the detection unit 40 may check the detected living body against information registered in advance as the second user in the user information table 31, and determine attribute information of the detected living body. Also, the detection unit 40 may determines that the detected living body is the second user who uses the information equipment 10 according to a frequency or the number of times of detection of the living body, and register the detected living body into the user information table 31.

Note that the detection unit 40 may detect various kinds of information by using the sensor 20 in addition to the information described above. For example, the detection unit 40 may detect positional information of the information equipment 10 and various physical quantities which information and quantities are acquired via the sensor 20, the physical quantities being, for example, acceleration, temperature, gravity, rotation (angular velocity), illuminance, geomagnetism, pressure, proximity, humidity, and a rotation vector. Also, the detection unit 40 may detect a connection status with various devices (for example, information related to establishment of communication, or a used communication standard) by using a built-in communication function.

Also, via a camera, microphone, or the like, the detection unit 40 may detect various kinds of information indicating a situation of the user, such as information of a specific chore performed by the user, contents of a watched TV program, information indicating what is eaten, or conversation being held with a specific person.

Also, by mutual communication with other information equipment 10 (such as IoT device) placed at home, the detection unit 40 may detect information such as which home appliance is active or not (for example, whether power is on or off) or what kind of processing is executed by which home appliance. Also, the detection unit 40 may detect a traffic condition, weather information, and the like in a living area of the user by mutual communication with an external service.

The reception unit 45 is a processing unit that receives various kinds of information. For example, the reception unit 45 receives control information to control an operation of the information equipment 10. Specifically, from the control device 100 or the relay equipment 200, the reception unit 45 receives control information instructing to turn off the own power, for example.

Note that via the control device 100 or the like, the reception unit 45 may previously receive setting information or the like that defines what kind of a response is made to the control information. The reception unit 45 stores the received information into the storage unit 30 as appropriate.

The determination unit 50 determines a response to the control information received by the reception unit 45 on the basis of the information detected by the detection unit 40.

For example, the determination unit 50 determines response candidates for the control information on the basis of the information detected by the detection unit 40, and presents the determined response candidate to the second user.

Specifically, the determination unit 50 presents response candidates to the second user by a using a speech output or a screen display. More specifically, the determination unit 50 checks the received control information against a current surrounding situation in the response table 32, and extracts response candidates from a result of the check. Then, the determination unit 50 transmits text data, screen display information, or the like indicating the response candidates (for example, whether to turn off the power or keep the power on) to the output control unit 55. In this case, the output control unit 55 performs control in such a manner that the response candidates are output from the output unit 60.

Furthermore, the determination unit 50 determines a response to be executed among the presented response candidates on the basis of a response from the second user who uses the information equipment 10. For example, in a case where the second user makes speech indicating intention to keep the power of the information equipment 10 on, the determination unit 50 adopts a candidate to "keep the power on" among the response candidates, and keeps the power of the information equipment 10 on. Alternatively, in a case where the second user indicates intention accepting to turn off the power of the information equipment 10 or does not respond at all, the determination unit 50 adopts a candidate to "turn off the power" among the response candidates, and turns off the power of the information equipment 10.

Note that on the basis of the information registered in the response table 32, the determination unit 50 may determine a response to the control information without presenting the response candidates to the second user. For example, in a case where the second user is detected around the information equipment 10, the determination unit 50 may determine, as a response, not to receive control by the control information. That is, in a case where the second user is located near the information equipment 10, the determination unit 50 may determine that the second user is using the information equipment 10 and determine to reject control information from a distance.

Also, in a case of presenting the response candidates to the second user, the determination unit 50 does not necessarily output information from the information equipment 10. For example, the air conditioner 10C that receives control information may transmit response candidates for the control information to the TV 10B via the relay equipment 200 or a network such as Wi-Fi. In this case, the TV 10B outputs the response candidates in the air conditioner 10C, such as "the air conditioner is about to be turned off. Is it okay to turn off the power?" That is, the information equipment 10 may cause, as a substitute for itself, another information equipment 10 to output response candidates by transmitting the response candidates thereto. As a result, even the information equipment 10 that does not have a function of a speech output or image output can present response candidates to the second user.

Also, the determination unit 50 may determine whether to reject control by the control information by using not only detection of the second user but also a distance to the second user as determination factors. For example, in a case where the second user is detected in the same building where the information equipment 10 is installed or in the same room where the information equipment 10 is installed, the determination unit 50 may determine, as a response, not to receive the control by the control information.

Also, the determination unit 50 may determine a response to the control information on the basis of whether the second user is detected around the information equipment 10 and a distance between the information equipment 10 and the second user matches a previously-registered condition. As a result, the determination unit 50 can determine highly accurately whether the second user is actually using the information equipment 10 and then determine a response to the control information.

Also, the determination unit 50 may determine a response to the control information on the basis of a line of sight or a direction of a body of the second user. For example, even when the second user is located in the same room as the TV 10B, there is a possibility that the TV 10B is not watched. Specifically, in a case where the line of sight or the direction of the body of the second user is not directed to the TV 10B, the determination unit 50 may determine that the second user is not watching the TV 10B, accept control by the control information, and determine to turn off the power of the TV 10B.

Note that in a case where the second user is not detected around the information equipment 10, the determination unit 50 may determine, as a response, to receive the control by the control information. That is, in a case where the second user is not detected around the information equipment 10, the determination unit 50 receives remote operation by the first user. In such a manner, since the information equipment 10 executes operation from the outside when a living body such as the first user is not nearby, it is possible to make a response that does not damage a demand of the first user who wants to perform the remote operation, or convenience of the remote operation.

Also, the determination unit 50 may determine whether to receive control by the control information according to a location of the control device 100 that is a transmission source of the control information. For example, in a case where the control device 100 is located in the same house or in the same room as the information equipment 10 to be controlled, the determination unit 50 may determine to receive control by the control information regardless of whether the second user is around.

Also, the determination unit 50 may determine a response to the control information on the basis of attribute information of the detected living body. Specifically, in a case where a watching second user is a child or the living body is a non-human (such as pet), the determination unit 50 may determine to receive control by the control information to turn off the power of the information equipment 10. Also, the determination unit 50 may refer to the information registered in the response table 32 and determine an operation according to a type of the information equipment 10. For example, in a case where the living body is a non-human such as a pet, the determination unit 50 may determine to receive control by the control information to "turn off the power of the TV 10B" and not to receive control by the control information to "turn off the power of the air conditioner 10C".

Also, after determining an operation with respect to the control information, the determination unit 50 may transmit contents of the determined operation, a result of an actual operation by the information equipment 10, or the like to the control device 100 that is a transmission source of the control information. That is, the determination unit 50 transmits feedback on the control information to the control device 100. As a result, the first user who makes a request to the information equipment 10 can perceive information such as what kind of operation is actually performed or not performed by the information equipment 10, or whether the second user is located near the information equipment 10.

The output control unit 55 performs control in such a manner that contents of the control information received by the reception unit 45, contents of a response determined by the determination unit 50, or the like is output from the output unit 60. For example, the output control unit 55 performs control in such a manner that a situation in which response candidates for the control information are presented to the second user, or in which the power of the information equipment 10 is about to be turned off by the control information is output from the output unit 60.

The output unit 60 is a mechanism to output various kinds of information. For example, the output unit 60 is a speaker or a display. For example, to the second user, the output unit 60 performs a speech output of response candidates or the like controlled by the output control unit 55 to be output. Also, the output unit 60 may output image data to the display.

### [1-5. Procedure of the information processing according to the first embodiment]

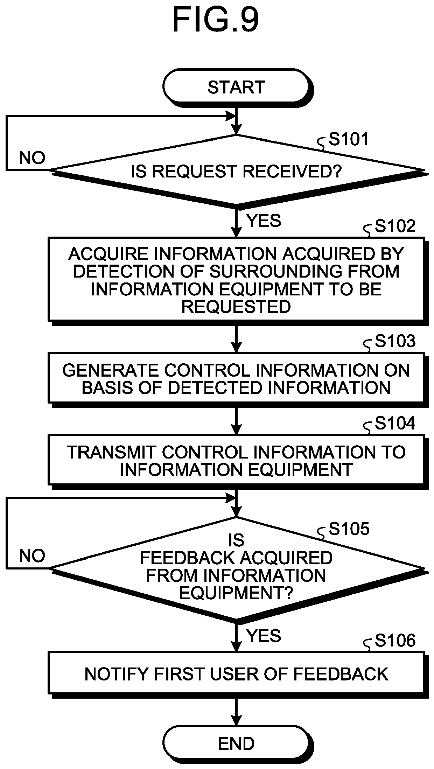

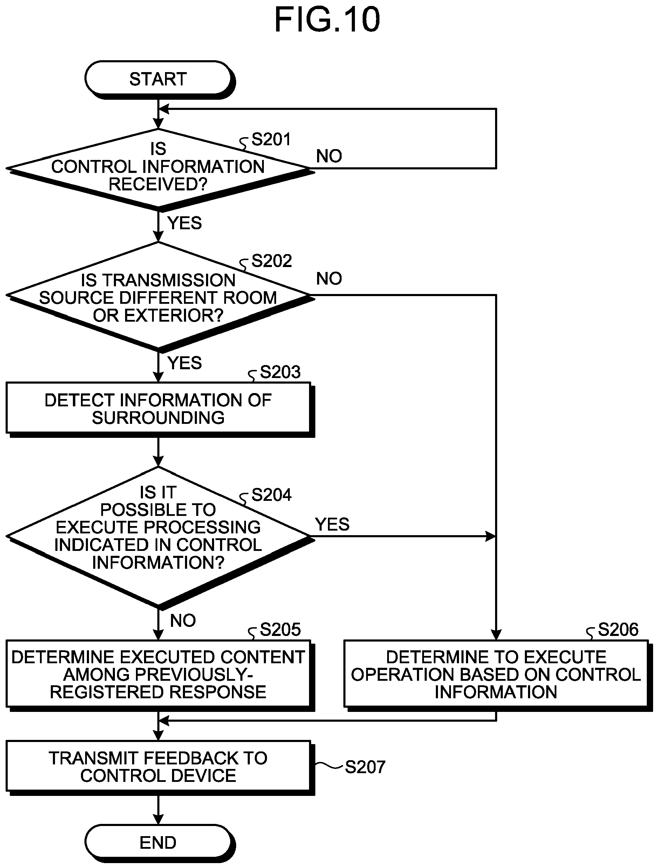

Next, a procedure of the information processing according to the first embodiment will be described with reference to FIG. 9 and FIG. 10. FIG. 9 is a flowchart (1) illustrating a flow of the processing according to the first embodiment. In FIG. 9, a processing procedure of a case where the control device 100 plays a central role and performs control with respect to the information equipment 10 will be described.

As illustrated in FIG. 9, the control device 100 determines whether a request for remote operation is received from the first user (Step S101). In a case where the request is not received (Step S101; No), the control device 100 waits until the request is received.

On the one hand, in a case where the request is received (Step S101; Yes), the control device 100 acquires, from the information equipment 10 that is a request destination, information acquired by detection of a surrounding (Step S102).

Subsequently, the control device 100 generates control information to control the information equipment 10 on the basis of the detected information (Step S103). Then, the control device 100 determines whether feedback indicating a result of an operation by the control information is acquired from the information equipment 10 (Step S104).

In a case where no feedback is acquired (Step S104; No), the control device 100 waits until the feedback is acquired. On the one hand, in a case where the feedback is received (Step S104; Yes), the control device 100 notifies the first user of contents of the feedback (Step S105).

Next, a procedure of the information processing according to the first embodiment will be described with reference to FIG. 10. FIG. 10 is a flowchart (2) illustrating a flow of the processing according to the first embodiment. In FIG. 10, a processing procedure of a case where the information equipment 10 plays a central role and performs control with respect to the information equipment 10 will be described.

As illustrated in FIG. 10, the information equipment 10 determines whether control information is received from the control device 100 or the relay equipment 200 (Step S201). In a case where the control information is not received (Step S201; No), the information equipment 10 waits until the control information is received.

On the one hand, in a case where the control information is received (Step S201; Yes), the information equipment 10 determines whether a transmission source of the control information (in other words, location of the control device 100) is a room different from a room where the information equipment 10 is installed, or is the exterior (Step S202).

In a case where the transmission source is the different room or the exterior (Step S202; Yes), the information equipment 10 detects information of the surrounding (Step S203).

Subsequently, on the basis of the detected information, the information equipment 10 determines whether processing indicated in the control information can be executed (Step S204). For example, the information equipment 10 refers to the information registered in the response table 32, and determines whether it is possible to perform an operation indicated in the control information under the detected situation.

In a case of determining that the processing indicated in the control information cannot be executed (Step S204; No), the information equipment 10 determines contents to be executed among responses registered in the response table 32 (Step S205). For example, instead of immediately executing the operation instructed in the control information, the information equipment 10 presents response candidates to the second user and waits for an instruction from the second user.

On the one hand, in a case where the processing indicated in the control information can be executed (Step S204; Yes), or in a case where the transmission source of the control information is in the same room (Step S202; No), the information equipment 10 determines to execute the operation based on the control information (Step S206).

Subsequently, the information equipment 10 transmits feedback to the control device 100 (Step S207).

### [1-6. Modification example according to the first embodiment]

The information processing according to the first embodiment described above may be accompanied by various modifications. A modification example of the first embodiment will be described in the following.

For example, a control device 100 and information equipment 10 may periodically update information registered in a storage unit 130 and a storage unit 30. For example, the control device 100 updates information in an information equipment table 131 and a relay equipment table 132 in response to addition of linked information equipment 10, an update of a function of the information equipment 10, and the like.

Also, the control device 100 may check whether each piece of information equipment 10 is operating normally by periodically transmitting an activation word, a predetermined script, or the like to each piece of the information equipment 10.

### (2. Second embodiment)

Next, the second embodiment will be described. An example in which each piece of the information equipment 10 detects a surrounding situation has been described in the first embodiment. In the second embodiment, an example in which relay equipment 200 detects a surrounding situation instead of information equipment 10 is described.

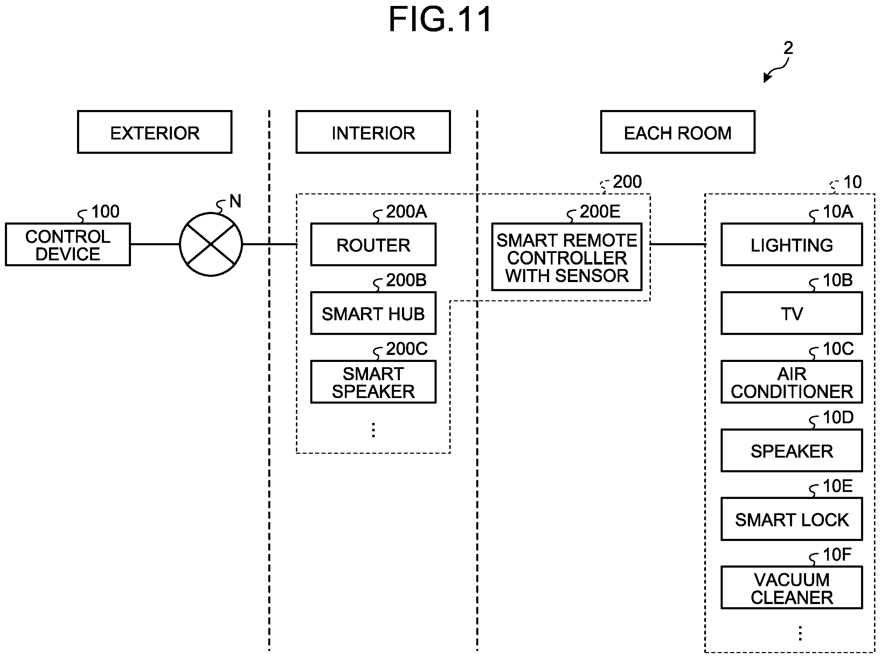

FIG. 11 is a view illustrating a configuration example of an information processing system 2 according to the second embodiment. As illustrated in FIG. 11, the information processing system 2 according to the second embodiment includes a smart remote controller with a sensor 200E as compared with the first embodiment. The smart remote controller with a sensor 200E is a remote controller having a biological sensor (motion sensor), a ranging sensor, a camera, or the like and has a function of detecting whether a second user is located around.

In the second embodiment, in a case where a control device 100 receives a request from a first user, the control device 100 first transmits a request for detecting a surrounding situation to the relay equipment 200. For example, in a case where the control device 100 tries to transmit control information to a TV 10B, the control device 100 transmits a request for detecting a surrounding situation to the smart remote controller with a sensor 200E as a relay destination.

When receiving the request, the smart remote controller with a sensor 200E detects the surrounding condition of the TV 10B that is a target of control by the control information. For example, the smart remote controller with a sensor 200E detects whether the second user is located around the TV 10B by using the motion sensor or the biological sensor. Also, the smart remote controller with a sensor 200E detects a distance between the second user and the TV 10B, and the like.

Then, the smart remote controller with a sensor 200E returns the detected information to the control device 100. The control device 100 generates control information for the TV 10B on the basis of the information acquired from the smart remote controller with a sensor 200E.

That is, in the second embodiment, an acquisition unit 145 according to the control device 100 acquires information related to a living body located around information equipment 10 that is a target of the request, and information related to a distance between the information equipment 10 and the living body by controlling a biological sensor and a ranging sensor included in equipment (such as relay equipment 200) different from the information equipment 10 or the control device 100. Then, the control device 100 generates control information corresponding to the request of the first user on the basis of the information acquired from the relay equipment 200.

Also, in the second embodiment, instead of performing detection by the information equipment 10, the information equipment 10 controls the relay equipment 200 to detect a living body located around the information equipment 10 and a distance between the information equipment 10 and the living body.

In such a manner, the relay equipment 200 executes the detection of a living body in the second embodiment. As a result, even in a case where the information equipment 10 is a device that does not have a sensor itself, the information equipment 10 and the control device 100 can execute the information processing according to the present disclosure.

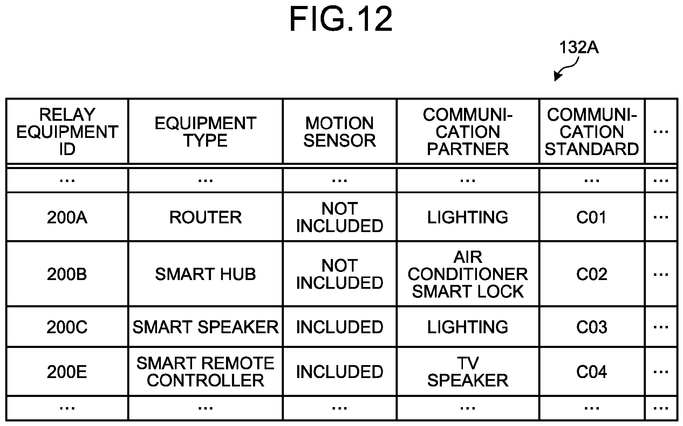

In the second embodiment, the control device 100 may include information indicating which piece of the relay equipment 200 has a sensor. This point will be described with reference to FIG. 12. FIG. 12 is a view illustrating an example of a relay equipment table 132A according to the second embodiment.

The relay equipment table 132A illustrated in FIG. 12 has an item of a "motion sensor" as compared with the relay equipment table 132 according to the first embodiment. The control device 100 refers to the relay equipment table 132A and identifies relay equipment 200 including a motion sensor. Then, by transmitting a detection request or the like to the identified relay equipment 200, the control device 100 acquires information acquired by detection of a surrounding situation of the information equipment 10.

### (3. Third embodiment)

Next, the third embodiment will be described. An example in which any piece of the relay equipment 200 detects a surrounding situation has been described in the second embodiment. In the third embodiment, an example in which a sensor device 300 detects a surrounding situation instead of relay equipment 200 or information equipment 10 is described.

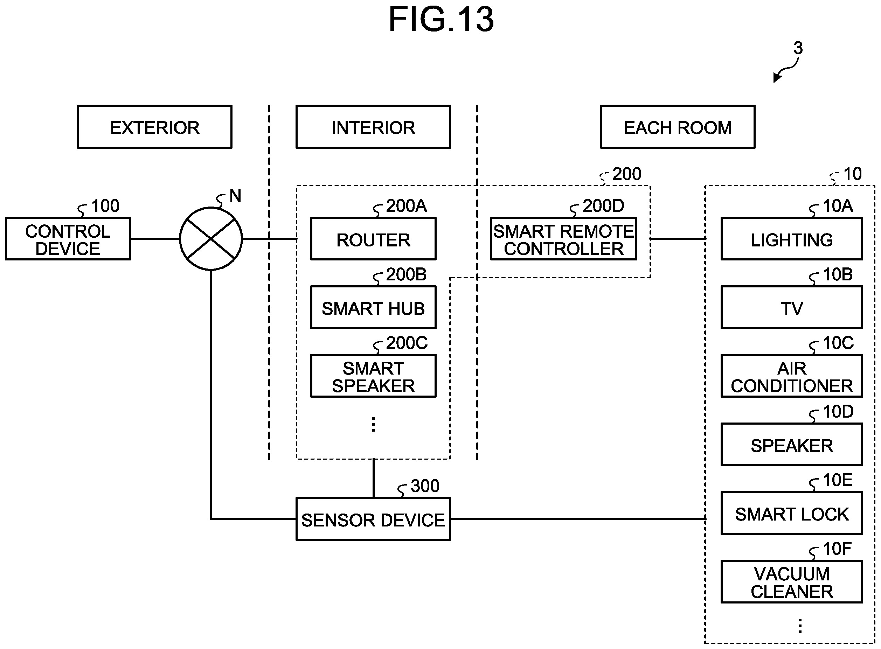

FIG. 13 is a view illustrating a configuration example of an information processing system 3 according to the third embodiment. As illustrated in FIG. 13, the information processing system 3 according to the third embodiment includes the sensor device 300 as compared with the first embodiment and the second embodiment. The sensor device 300 is a sensing-dedicated device having a biological sensor (motion sensor), a ranging sensor, a camera, and the like, and has a function of detecting whether a second user is located around. Note that the sensor device 300 may include a plurality of devices instead of one device.

In the third embodiment, in a case where a control device 100 receives a request from a first user, the control device 100 first transmits a request for detecting a surrounding situation to the sensor device 300. For example, in a case where the control device 100 tries to transmit control information to a TV 10B, the control device 100 transmits a request for detecting a surrounding situation to the sensor device 300 installed at home.

When receiving the request, the sensor device 300 detects a surrounding situation of the TV 10B that is a target of control by the control information. For example, the sensor device 300 detects whether the second user is located around the TV 10B by using the motion sensor or the biological sensor. Also, the sensor device 300 detects a distance between the second user and the TV 10B, and the like.

Then, the sensor device 300 returns the detected information to the control device 100. The control device 100 generates control information for the TV 10B on the basis of the information acquired from the sensor device 300. Then, the control device 100 generates control information corresponding to the request of the first user on the basis of the information acquired from the sensor device 300.

Also, in the second embodiment, instead of performing detection by information equipment 10, the information equipment 10 controls the sensor device 300 to detect a living body located around the information equipment 10 and a distance between the information equipment 10 and the living body.

In such a manner, the sensor device 300 executes the detection of a living body in the third embodiment. As a result, even in a case where the information equipment 10 and relay equipment 200 are devices having no sensor, the information equipment 10 and the control device 100 can execute the information processing according to the present disclosure.

### (4. Other embodiments)

The processing according to each of the above-described embodiments may be carried out in various different forms other than each of the above-described embodiments.

In each of the above embodiments, an example in which a control device 100 is a so-called smart phone or tablet terminal and performs processing in a stand-alone manner has been described. However, a control device 100 may perform information processing according to the present disclosure in cooperation with a server device (so-called cloud server or the like) connected by a network. Also, instead of performing processing in a stand-alone manner, information equipment 10 may also perform the information processing according to the present disclosure in cooperation with the cloud server or the like connected by the network.

Also, in each of the above embodiments, an example in which a control device 100 is a so-called smart phone or tablet terminal and is equipment different from relay equipment 200 is illustrated. However, since the control device 100 can be realized as long as being an information processing device having the configuration illustrated in FIG. 3, even relay equipment 200 such as a smart speaker 200C or a smart remote controller 200D can function as the control device 100, for example.

Also, in each of the above embodiments, an example in which the control device 100 acquires information, which is acquired by detection of a situation around information equipment 10, by controlling another equipment (information equipment 10 or relay equipment 200) has been described. However, an acquisition unit 145 according to the control device 100 may acquire information related to a living body located around information equipment 10 that is a target of a request, and information related to a distance between the information equipment 10 and the living body by using a biological sensor and a ranging sensor included in the control device 100. In this case, the control device 100 has a device and a processing unit similar to the sensor 20 and the detection unit 40 illustrated in FIG. 6. Also, in a case where relay equipment 200 is a control device according to the present disclosure, as described in the second embodiment, the relay equipment 200 may acquire information related to a living body located around information equipment 10 that is a target of a request, and information related to a distance between the information equipment 10 and the living body by using a sensor included in the relay equipment 200.

Also, a control device and information equipment according to the present disclosure may include an information processing system, which includes a plurality of devices, instead of a single unit such as the control device 100 or the information equipment 10.

Also, the information equipment and the control device according to the present disclosure may be realized in a form of an IC chip or the like mounted in the information equipment 10 or the control device 100.

Also, among the processing described in each of the above embodiments, all or a part of the processing described to be automatically performed can be manually performed, or all or a part of the processing described to be manually performed can be automatically performed by a known method. In addition, a processing procedure, specific name, and information including various kinds of data and parameters illustrated in the above document or drawings can be arbitrarily changed unless otherwise specified. For example, various kinds of information illustrated in each drawing are not limited to the illustrated information.

Also, each component of each of the illustrated devices is a functional concept, and does not need to be physically configured in a manner illustrated in the drawings. That is, a specific form of distribution/integration of each device is not limited to what is illustrated in the drawings, and a whole or part thereof can be functionally or physically distributed/integrated in an arbitrary unit according to various loads and usage conditions. For example, a determination unit 50 and an output control unit 55 may be integrated.

Also, the above-described embodiments and modification examples can be arbitrarily combined within a range in which processing contents do not contradict each other.

Also, an effect described in the present description is merely an example and is not a limitation, and there may be a different effect.

### (5. Effect of information equipment or control device according to the present disclosure)

As described above, the information equipment according to the present disclosure (information equipment 10 in the embodiment) includes a reception unit (reception unit 45 in the embodiment), a detection unit (detection unit 40 in the embodiment), and a determination unit (determination unit 50 in the embodiment). The reception unit receives control information to control an operation of the information equipment. The detection unit detects a living body located around the information equipment (second user or the like in the embodiment), and also detects a distance between the information equipment and the living body. The determination unit determines a response to control information on the basis of the information detected by the detection unit.

In such a manner, by detecting a living body located around and a distance to the living body, and determining a response to control information on the basis of the detected information, the information equipment according to the present disclosure can perform appropriate processing according to an actual usage situation of the information equipment.

Also, the determination unit determines response candidates for the control information on the basis of the information detected by the detection unit, and presents the determined response candidates to the living body (such as second user). In such a manner, the information equipment according to the present disclosure can leave determination about a response to the second user by presenting the response candidates to the second user. In other words, since the information equipment according to the present disclosure can give a choice to the second user regarding the response to the control information, a situation stressful to the second user in which the information equipment is controlled against intention of the second user can be prevented.

Also, the determination unit presents the response candidates by using a speech output or screen display. As a result, the information equipment according to the present disclosure can present the response candidates to the user in an easy-to-understand manner even in a case where the second user is doing some kinds of work or watching a TV or the like, for example.

Also, the determination unit determines a response to be executed among the presented response candidates on the basis of a response from the user who uses the information equipment (second user in the embodiment). As a result, the information equipment according to the present disclosure can make a response that respects the intention of the second user even in a case where control information by remote operation is received.

Also, in a case where a living body is detected around the information equipment, the determination unit determines, as a response, not to receive control by the control information. As a result, even in a case where control information by remote operation is received, the information equipment according to the present disclosure can prevent a situation in which power is turned off against intention of the second user, for example.

Also, in a case where the living body is detected in the same building where the information equipment is installed or in the same room where the information equipment is installed, the determination unit determines, as a response, not to receive the control by the control information. As a result, the information equipment according to the present disclosure can make an appropriate response according to a location of the second user.

Also, the determination unit determines a response to the control information on the basis of whether the living body is detected around the information equipment and whether a distance between the information equipment and the living body matches a previously-registered condition. As a result, the information equipment according to the present disclosure can make an appropriate response according to a location of the second user or a characteristic of each home appliance.

Also, the detection unit detects a line of sight or a direction of a body of the living body. The determination unit determines a response to the control information on the basis of the line of sight or the direction of the body of the living body. As a result, the information equipment according to the present disclosure can accurately determine a situation such as whether the second user is actually using the information equipment, and then make an appropriate response to the control information.

Also, in a case where the living body is not detected around the information equipment, the determination unit determines, as a response, to receive the control by the control information. As a result, the information equipment according to the present disclosure can maintain convenience of remote operation.

Also, the determination unit determines a response to the control information on the basis of attribute information of the detected living body. As a result, the information equipment according to the present disclosure can flexibly respond to various situations such as a case where the living body is a child or a non-human such as a pet.

Also, as described above, the control device according to the present disclosure (control device 100 in the embodiment) includes a receiving unit (receiving unit 140 in the embodiment), an acquisition unit (acquisition unit 145 in the embodiment), and a generation unit (generation unit 150 in the embodiment). The receiving unit receives a request for controlling the information equipment from a user (first user in the embodiment). The acquisition unit acquires information related to a living body located around information equipment that is a target of the request, and information related to a distance between the information equipment and the living body. The generation unit generates control information corresponding to the request on the basis of the information acquired by the acquisition unit.

In such a manner, after acquiring information acquired by detection of a living body located around information equipment, to which control information is to be transmitted, and a distance to the living body, the control device according to the present disclosure generates control information on the basis of the detected information. As a result, the control device can perform appropriate processing according to an actual usage situation of the information equipment.

Also, the acquisition unit acquires information related to a living body located around information equipment that is a target of a request, and information related to a distance between the information equipment and the living body by using a biological sensor and a ranging sensor included in the control device. As a result, the control device according to the present disclosure can perform appropriate processing according to an actual usage situation of the information equipment.

Also, by controlling a biological sensor and a ranging sensor included in equipment different from the control device, the acquisition unit acquires information related to a living body located around information equipment that is a target of a request, and information related to a distance between the information equipment and the living body. As a result, the control device according to the present disclosure can perform appropriate processing according an actual usage situation of the information equipment even in a case where the control device itself does not have a sensor or the control device and the information equipment are installed at different positions.

Also, the generation unit determines whether information related to a living body located around information equipment that is a target of a request and information related to a distance between the information equipment and the living body match a previously-registered condition, and generates, on the basis of a result of the determination, control information indicating to execute the requested contents or control information indicating to reject the request. As a result, even in a case where the first user tries to control the information equipment by remote operation, the control device according to the present disclosure can prevent a situation in which power is turned off against intension of the second user, for example.

Also, on the basis of information related to a living body located around information equipment that is a target of a request and information related to a distance between the information equipment and the living body, the generation unit generates control information to control the information equipment in such a manner as to present response candidates of the information equipment for the control information. As a result, since the control device according to the present disclosure can give a choice to the second user who is a user of the information equipment to be controlled by the first user, a situation stressful to the second user in which the information equipment is controlled against intention of the second user can be prevented.

Also, the acquisition unit acquires a result of the operation executed by the information equipment on the basis of the control information generated by the generation unit. As a result, the control device according to the present disclosure can notify the first user of a status such as whether the information equipment can be actually controlled by the control information. Thus, useful information can be provided to the first user.

### (6. Hardware configuration)

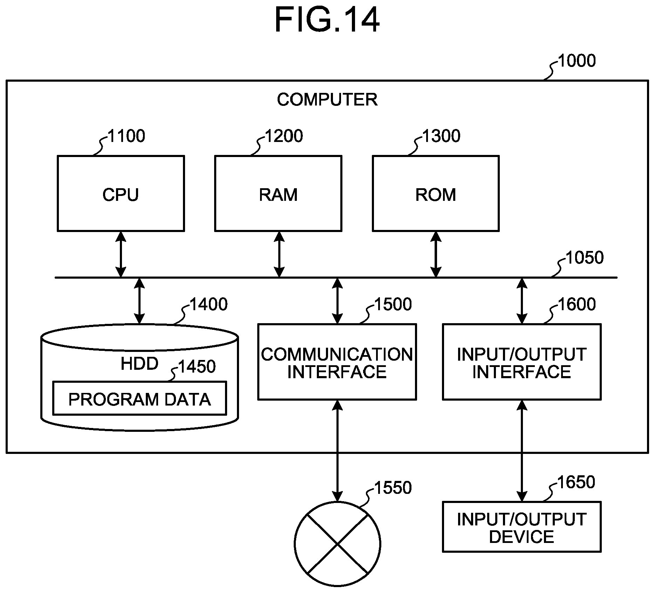

Information processing devices such as a control device 100, information equipment 10, relay equipment 200, and a sensor device 300 according to each of the above-described embodiments are realized, for example, by a computer 1000 having a configuration illustrated in FIG. 14. In the following, the information equipment 10 according to the first embodiment will be described as an example. FIG. 14 is a hardware configuration diagram illustrating an example of a computer 1000 that realizes functions of the information equipment 10. The computer 1000 includes a CPU 1100, a RAM 1200, a read only memory (ROM) 1300, a hard disk drive (HDD) 1400, a communication interface 1500, and an input/output interface 1600. Each unit of the computer 1000 is connected by a bus 1050.

The CPU 1100 operates on the basis of programs stored in the ROM 1300 or the HDD 1400, and controls each unit. For example, the CPU 1100 expands the programs, which are stored in the ROM 1300 or the HDD 1400, in the RAM 1200 and executes processing corresponding to various programs.

The ROM 1300 stores a boot program such as a basic input output system (BIOS) executed by the CPU 1100 during activation of the computer 1000, a program that depends on hardware of the computer 1000, and the like.

The HDD 1400 is a computer-readable recording medium that non-temporarily records a program executed by the CPU 1100, data used by the program, and the like. More specifically, the HDD 1400 is a recording medium that records an information processing program according to the present disclosure which program is an example of program data 1450.

The communication interface 1500 is an interface with which the computer 1000 is connected to an external network 1550 (such as the Internet). For example, the CPU 1100 receives data from another equipment or transmits data generated by the CPU 1100 to another equipment via the communication interface 1500.

The input/output interface 1600 is an interface to connect the input/output device 1650 and the computer 1000. For example, the CPU 1100 receives data from an input device such as a keyboard or mouse via the input/output interface 1600. Also, the CPU 1100 transmits data to an output device such as a display, a speaker, or a printer via the input/output interface 1600. Also, the input/output interface 1600 may function as a medium interface that reads a program or the like recorded on a predetermined recording medium (medium). The medium is, for example, an optical recording medium such as a digital versatile disc (DVD) or phase change rewritable disk (PD), a magneto-optical recording medium such as a magneto-optical disk (MO), a tape medium, a magnetic recording medium, a semiconductor memory, or the like.

For example, in a case where the computer 1000 functions as the information equipment 10 according to the first embodiment, the CPU 1100 of the computer 1000 realizes a function of the detection unit 40 or the like by executing the information processing program loaded on the RAM 1200. Also, the HDD 1400 stores an information processing program according to the present disclosure, and data in the storage unit 30. Note that the CPU 1100 reads the program data 1450 from the HDD 1400 and executes the program data 1450, but may acquire these programs from another device via the external network 1550 in another example.

Note that the present technology can also have the following configurations.
(1) Information equipment comprising:
   a reception unit that receives control information to control an operation of the information equipment;
   a detection unit that detects a living body located around the information equipment and detects a distance between the information equipment and the living body; and
   a determination unit that determines a response to the control information on the basis of the information detected by the detection unit.
(2) The information equipment according to (1), wherein the determination unit
   determines response candidates for the control information on the basis of the information detected by the detection unit, and presents the determined response candidates to the living body.
(3) The information equipment according to (2), wherein the determination unit presents the response candidates by using a speech output or screen display.
(4) The information equipment according to (2) or (3), wherein
   the determination unit
   determines, on the basis of a response from a user who uses the information equipment, a response to be executed among the presented response candidates.
(5) The information equipment according to any one of (1) to (4), wherein
   the determination unit
   determines, as the response, not to receive control by the control information in a case where a living body is detected around the information equipment.
(6) The information equipment according to (5), wherein the determination unit
   determines, as the response, not to receive control by the control information in a case where a living body is detected in a same building where the information equipment is installed or in a same room where the information equipment is installed.
(7) The information equipment according to any one of (1) to (6), wherein
   the determination unit
   determines a response to the control information on the basis of whether a living body is detected around the information equipment and whether a distance between the information equipment and the living body matches a previously-registered condition.
(8) The information equipment according to any one of (1) to (7), wherein
   the detection unit
   detects a line of sight or a direction of a body of the living body, and
   the determination unit
   determines a response to the control information on the basis of the line of sight or the direction of the body of the living body.
(9) The information equipment according to any one of (1) to (8), wherein
   the determination unit
   determines, as the response, to receive control by the control information in a case where a living body is not detected around the information equipment.
(10) The information equipment according to any one of (1) to (9), wherein
   the determination unit
   determines a response to the control information on the basis of attribute information of the detected living body.
(11) An information processing method, by information equipment, comprising:
   receiving control information to control an operation of the information equipment;
   detecting a living body located around the information equipment, and detecting a distance between the information equipment and the living body; and
   determining a response to the control information on the basis of the detected information.
(12) An information processing program causing information equipment to function as:
   a reception unit that receives control information to control an operation of the information equipment;
   a detection unit that detects a living body located around the information equipment and detects a distance between the information equipment and the living body; and
   a determination unit that determines a response to the control information on the basis of the information detected by the detection unit.
(13) A control device comprising:
   a receiving unit that receives a request for controlling information equipment from a user;
   an acquisition unit that acquires information related to a living body located around the information equipment that is a target of the request, and information related to a distance between the information equipment and the living body; and
   a generation unit that generates control information corresponding to the request on the basis of the information acquired by the acquisition unit.
(14) The control device according to (13), wherein
   the acquisition unit
   acquires the information related to the living body located around the information equipment that is the target of the request and the information related to the distance between the information equipment and the living body by using a biological sensor and a ranging sensor included in the control device.
(15) The control device according to (13), wherein
   the acquisition unit
   acquires the information related to the living body located around the information equipment that is the target of the request and the information related to the distance between the information equipment and the living body by controlling a biological sensor and a ranging sensor included in equipment different from the control device.
(16) The control device according to any one of (13) to (15), wherein
   the generation unit
   determines whether the information related to the living body located around the information equipment that is the target of the request, and the information related to the distance between the information equipment and the living body match a previously-registered condition, and generates, on the basis of a result of the determination, control information indicating to execute the requested contents or control information indicating to reject the request.
(17) The control device according to any one of (13) to (16), wherein
   the generation unit
   generates, on the basis of the information related to the living body located around the information equipment that is the target of the request and the information related to the distance between the information equipment and the living body, control information to control the information equipment in such a manner as to present response candidates of the information equipment for the control information.
(18) The control device according to any one of (13) to (17), wherein
   the acquisition unit
   acquires a result of an operation executed by the information equipment on the basis of the control information generated by the generation unit.
(19) A control method, by a control device, comprising: receiving a request for controlling information equipment from a user;
   acquiring information related to a living body located around the information equipment that is a target of the request, and information related to a distance between the information equipment and the living body; and
   generating control information corresponding to the request on the basis of the acquired information.
(20) A control program causing a control device to function as :
   a receiving unit that receives a request for controlling information equipment from a user;
   an acquisition unit that acquires information related to a living body located around the information equipment that is a target of the request, and information related to a distance between the information equipment and the living body; and
   a generation unit that generates control information corresponding to the request on the basis of the information acquired by the acquisition unit.

### Reference Signs List

- 1, 2, 3: INFORMATION PROCESSING SYSTEM
- 10: INFORMATION EQUIPMENT
- 20: SENSOR
- 20A: MOTION SENSOR
- 20B: RANGING SENSOR
- 21: INPUT UNIT
- 22: COMMUNICATION UNIT
- 30: STORAGE UNIT
- 31: USER INFORMATION TABLE
- 32: RESPONSE TABLE
- 40: DETECTION UNIT
- 45: RECEPTION UNIT
- 50: DETERMINATION UNIT
- 55: OUTPUT CONTROL UNIT
- 60: OUTPUT UNIT
- 100: CONTROL DEVICE
- 120: SENSOR
- 120A: SPEECH INPUT SENSOR
- 120B: IMAGE INPUT SENSOR
- 121: INPUT UNIT
- 122: COMMUNICATION UNIT
- 130: STORAGE UNIT
- 131: INFORMATION EQUIPMENT TABLE
- 132: RELAY EQUIPMENT TABLE
- 140: RECEIVING UNIT
- 141: DETECTION UNIT
- 142: REGISTRATION UNIT
- 145: ACQUISITION UNIT
- 150: GENERATION UNIT
- 155: TRANSMISSION UNIT
- 160: OUTPUT UNIT
- 200: RELAY EQUIPMENT

## Claims

1. Information equipment comprising:
a reception unit that receives control information to control an operation of the information equipment;
a detection unit that detects a living body located around the information equipment and detects a distance between the information equipment and the living body; and
a determination unit that determines a response to the control information on the basis of the information detected by the detection unit.

2. The information equipment according to claim 1, wherein
the determination unit
determines response candidates for the control information on the basis of the information detected by the detection unit, and presents the determined response candidates to the living body.

3. The information equipment according to claim 2, wherein
the determination unit
presents the response candidates by using a speech output or screen display.

4. The information equipment according to claim 2, wherein
the determination unit
determines, on the basis of a response from a user who uses the information equipment, a response to be executed among the presented response candidates.

5. The information equipment according to claim 1, wherein
the determination unit
determines, as the response, not to receive control by the control information in a case where a living body is detected around the information equipment.

6. The information equipment according to claim 5, wherein
the determination unit
determines, as the response, not to receive control by the control information in a case where a living body is detected in a same building where the information equipment is installed or in a same room where the information equipment is installed.

7. The information equipment according to claim 1, wherein
the determination unit
determines a response to the control information on the basis of whether a living body is detected around the information equipment and whether a distance between the information equipment and the living body matches a previously-registered condition.

8. The information equipment according to claim 1, wherein
the detection unit
detects a line of sight or a direction of a body of the living body, and
the determination unit
determines a response to the control information on the basis of the line of sight or the direction of the body of the living body.

9. The information equipment according to claim 1, wherein
the determination unit
determines, as the response, to receive control by the control information in a case where a living body is not detected around the information equipment.

10. The information equipment according to claim 1, wherein
the determination unit
determines a response to the control information on the basis of attribute information of the detected living body.

11. An information processing method, by information equipment, comprising:
receiving control information to control an operation of the information equipment;
detecting a living body located around the information equipment, and detecting a distance between the information equipment and the living body; and
determining a response to the control information on the basis of the detected information.

12. An information processing program causing information equipment to function as:
a reception unit that receives control information to control an operation of the information equipment;
a detection unit that detects a living body located around the information equipment and detects a distance between the information equipment and the living body; and
a determination unit that determines a response to the control information on the basis of the information detected by the detection unit.

13. A control device comprising:
a receiving unit that receives a request for controlling information equipment from a user;
an acquisition unit that acquires information related to a living body located around the information equipment that is a target of the request, and information related to a distance between the information equipment and the living body; and
a generation unit that generates control information corresponding to the request on the basis of the information acquired by the acquisition unit.

14. The control device according to claim 13, wherein
the acquisition unit
acquires the information related to the living body located around the information equipment that is the target of the request and the information related to the distance between the information equipment and the living body by using a biological sensor and a ranging sensor included in the control device.

15. The control device according to claim 13, wherein
the acquisition unit
acquires the information related to the living body located around the information equipment that is the target of the request and the information related to the distance between the information equipment and the living body by controlling a biological sensor and a ranging sensor included in equipment different from the control device.

16. The control device according to claim 13, wherein
the generation unit
determines whether the information related to the living body located around the information equipment that is the target of the request, and the information related to the distance between the information equipment and the living body match a previously-registered condition, and generates, on the basis of a result of the determination, control information indicating to execute the requested contents or control information indicating to reject the request.

17. The control device according to claim 13, wherein
the generation unit
generates, on the basis of the information related to the living body located around the information equipment that is the target of the request and the information related to the distance between the information equipment and the living body, control information to control the information equipment in such a manner as to present response candidates of the information equipment for the control information.

18. The control device according to claim 13, wherein the acquisition unit
acquires a result of an operation executed by the information equipment on the basis of the control information generated by the generation unit.

19. A control method, by a control device, comprising:
receiving a request for controlling information equipment from a user;
acquiring information related to a living body located around the information equipment that is a target of the request, and information related to a distance between the information equipment and the living body; and
generating control information corresponding to the request on the basis of the acquired information.

20. A control program causing a control device to function as :
a receiving unit that receives a request for controlling information equipment from a user;
an acquisition unit that acquires information related to a living body located around the information equipment that is a target of the request, and information related to a distance between the information equipment and the living body; and
a generation unit that generates control information corresponding to the request on the basis of the information acquired by the acquisition unit.
